Europäisches Patentamt

(19) European Patent Office

Office européen des brevets

(11) Numéro de publication: **0 227 524 B1**

## (12) FASCICULE DE BREVET EUROPEEN

(45) Date de publication de fascicule du brevet:
27.12.91

(21) Numéro de dépôt: 86402566.3

(22) Date de dépôt: **19.11.86**

(51) Int. Cl.⁵: **B64C 11/18**

(54) Perfectionnements apportés aux hélices aériennes en ce qui concerne le profil de leurs pales.

(30) Priorité: **19.11.85 FR 8517080**

(43) Date de publication de la demande:
**01.07.87 Bulletin 87/27**

(45) Mention de la délivrance du brevet:
**27.12.91 Bulletin 91/52**

(84) Etats contractants désignés:
**DE GB IT**

(56) Documents cités:
**GB-A- 2 102 505**
**US-A- 2 524 870**

(73) Titulaire: **Office National d'Etudes et de Recherches Aérospatiales (O.N.E.R.A.)**
**29 Avenue de la Division Leclerc**
**F-92320 Châtillon-sous-Bagneux(FR)**

Titulaire: **RATIER-FIGEAC**
**B.P. 2**
**F-46101 Figeac(FR)**

(72) Inventeur: **Rodde, Anne-Marie**
**3 Square des Poètes**
**F-91370 Verrières Le Buisson(FR)**
Inventeur: **Thibert, Jean-Jacques**
**1 Square des Erables**
**F-91370 Verrières Le Buisson(FR)**

(74) Mandataire: **Jacquelin, Marc-Henri et al**
**Cabinet PLASSERAUD 84, rue d'Amsterdam**
**F-75009 Paris(FR)**

## Description

L'invention est relative aux hélices aériennes telles que des héclices de propulseurs d'aéronefs ou des hélices d'éoliennes et concerne des perfectionnements apportés au profil de leurs pales.

On sait que la poussée engendrée par une hélice d'aéronef résulte des poussées élémentaires engendrées par chaque profil, chaque poussée élémentaire étant donnée par la formule 1/2 (p $C_Z$ I $V^2$), dans laquelle

p est la masse volumique de l'air,

$C_Z$ est le coefficient de portance du profil considéré,

I est la corde du profil, V est la vitesse relative au niveau du profil considéré, vitesse résultant de la composition de la vitesse due à la rotation de l'hélice et de la vitesse due à l'avancement de l'aéronef.

Actuellement on cherche, pour une poussée donnée de l'hélice,

- d'une part, à réduire le bruit qui est directement fonction de la vitesse relative en bout de pale,
- et d'autre part, à diminuer le poids de la pale, donc à diminuer la corde des profils constitutifs de la pale.

On est donc conduit à concevoir des profils de pale qui présentent des coefficients de portance élevés, surtout dans les conditions de fonctionnement lors du décollage et de la montée de l'aéronef.

Par ailleurs, la vitesse de croisière souhaitée pour les aéronefs étant de plus en plus élevée, la vitesse relative du profil en bout de pale peut atteindre des nombres de Mach relatifs de 0,8 à 0,9. Dans ces conditions de fonctionnement le profil doit avoir encore un comportement sain, c'est-à-dire qu'il ne doit se produire ni onde de choc, ni décollement de la couche limite, afin de limiter le coefficient de trainée des pales et d'obtenir de bonnes valeurs de rendement pour l'hélice.

Un des paramètres caractéristiques d'un profil est sa courbure C dans différents points, courbure C qui, en chaque point, est égale au rapport entre sa corde I et le rayon de courbure R du point considéré, soit C = I/R.

On a déjà proposé (voir le brevet FR 2 510 066 et la revue "FLIGHT INTERNATIONAL - BOCCI" Novembre 1976) de réduire la courbure maximale du bord d'attaque du profil ce qui permet de diminuer les survitesses, d'une part, sur l'extrados du profil pendant le fonctionnement lors du décollage et de la montée de l'aéronef, et d'autre part, sur l'intrados du profil pendant le fonctionnement en vitesse de croisière de l'aéronef.

Par contre, les répartitions de pressions obtenues sur ces nouveaux profils sont proches de celles existantes sur les profils classiques NACA 16, ce qui limite les performances des hélices comportant de tels profils.

La présente invention a pour objet un profil pour pales conférant à l'hélice de bonnes performances dans toutes les conditions de fonctionnement (décollage, montée et croisière de l'aéronef).

La présente invention a donc pour but un profil dont le coefficient de portance est élevé dans les conditions de fonctionnement lors du décollage et de la montée de l'aéronef et dont le coefficient de trainée est faible dans les conditions de fonctionnement à la vitesse de croisière de l'aéronef.

Un profil conforme à l'invention possède les qualités requises également pour l'application aux éoliennes pour lesquelles un excellent rendement est toujours recherché.

L'hélice aérienne selon l'invention est decrite dans la revendication 1.

Cette loi d'évolution des courbures de l'extrados, dans la région voisine du bord d'attaque et dans la partie arrière du profil, permet d'obtenir des valeurs élevées du coefficient de portance dans les conditions de fonctionnement correspondant au décollage et à la montée de l'aéronef tout en réduisant le coefficient de trainée et en améliorant la finesse du profil pendant cette phase de montée.

Quant à la loi d'évolution des courbures de l'intrados, elle permet, dans la région voisine du bord d'attaque, de limiter les survitesses au voisinage du bord d'attaque lors du fonctionnement à la vitesse de croisière, et elle permet, dans la partie arrière du profil, d'obtenir des recompressions de l'écoulement ce qui évite la formation d'onde de choc et les phénomènes de décollement de la couche limite. De plus, la recompression progressive de l'écoulement jusqu'au bord de fuite permet de réduire le coefficient de trainée lors du fonctionnement à la vitesse de croisière.

Selon une disposition avantageuse de l'invention il est prévu que de part et d'autre du point à 4 % de la longueur de la corde, sur une distance relative de 2 % de part et d'autre de ce point, la courbure de l'extrados évolue très faiblement.

Selon une autre disposition avantageuse de l'invention, il est prévu que de part et d'autre du point à 3,5 % de la longueur de la corde, sur une distance relative de 2 % de part et d'autre de ce point, la courbure de l'intrados évolue très faiblement.

Selon encore une autre disposition avantageuse de l'invention, il est prévu que de part et d'autre du point de la corde où la courbure de l'intrados est nulle, sur une distance relative de 2 % de part et d'autre de ce point, la courbure de l'intrados évolue très faiblement.

De préférence, la courbure $C_{max}$ au bord d'attaque est donnée par la formule :

$$C_{max} = a_1\,(e/l) + a_2\,(e/l)^2 + a_3\,(e/l)^3 + a_4\,(e/l)^4$$

e étant l'épaisseur du profil,
l étant la corde du profil,
$a_1$ étant un coefficient égal à $+ 2.10^3$,
$a_2$ étant un coefficient égal à $- 4,576.10^4$,
$a_3$ étant un coefficient égal à $+ 3,5.10^5$,
$a_4$ étant un coefficient égal à $- 8,5.10^6$.

Avantageusement le point de la corde où la courbure de l'intrados est nulle a une abscisse X, ramenée à la corde l, donnée par la formule :

$$(x/l) = 2(e/l) + 0,08$$

e étant l'épaisseur du profil,
l étant la corde du profil.

L'invention consiste, mises à part les dispositions dont il vient d'être question, en certaines autres dispositions qui s'utilisent de préférence en même temps et dont il sera plus explicitement question ci-après.

L'invention pourra, de toute façon, être bien comprise à l'aide du complément de description qui suit ainsi que des dessins ci-annexés, lesquels complément et dessins sont relatifs à un mode de réalisation préféré de l'invention et ne comportent aucun caractère limitatif :
- la figure 1 de ce dessin montre un profil de pales d'hélice établi conformément à l'invention,
- la figure 2 représente l'évolution des courbures sur l'extrados et l'intrados du profil selon l'invention montré sur la figure 1,
- la figure 3 est une vue agrandie du bord d'attaque du profil selon l'invention montré sur la figure 1,
- la figure 4 est un diagramme où sont tracées les lois d'épaisseur de quatre profils selon l'invention présentant respectivement des épaisseurs relatives de 4 %, 7 %, 12 % et 20 %,
- la figure 5 est un diagramme où sont tracés les squelettes de quatre profils selon l'invention présentant respectivement des épaisseurs relatives de 4 %, 7 %, 12 % et 20 %,
- les figures 6a, 6b, 6c, 6d montrent quatre profils établis conformément à l'invention et présentant respectivement des épaisseurs relatives de 4 %, 7 %, 12 % et 20 %,
- les figures 7a, 7b, 7c montrent trois profils établis conformément à l'invention et présentant respectivement des épaisseurs relatives de 7 %, 12 % et 20 %, chacun de ces trois profils étant comparé à des profils connus,
- la figure 8a est un diagramme où sont tracées, d'une part les répartitions du coefficient de pression sur un profil établi conformément à l'invention et présentant une épaisseur relative de 7 % et, d'autre part les répartitions du coefficient de pression sur un profil classique NACA 16707, et ce pour les conditions de fonctionnement pendant la phase de décollage,
- la figure 8b est un diagramme où sont tracées, d'une part les répartitions du coefficient de pression sur un profil établi conformément à l'invention et présentant une épaisseur relative de 7 % et, d'autre part les répartitions du coefficient de pression sur un profil classique NACA 16707, et ce pour des conditions de fonctionnement pendant la phase de montée,
- la figure 8c est un diagramme où sont tracées, d'une part les répartitions du coefficient de pression sur un profil établi conformément à l'invention et présentant une épaisseur relative de 7 % et, d'autre part les répartitions du coefficient de pression sur un profil classique NACA 16707, et ce pour des conditions de fonctionnement pendant la phase de croisière,
- la figure 9 est un diagramme sur lequel sont tracées les évolutions du coefficient de finesse en fonction du coefficient de portance dans les conditions de fonctionnement en phase de montée et en phase de croisière, ces évolutions étant représentées pour un profil selon l'invention présentant une épaisseur relative de 7 % et pour un profil classique NACA 16707,
- la figure 10a est un diagramme comportant les coefficients de portance maximum d'un profil selon l'invention présentant une épaisseur relative de 7 % et d'un profil classique NACA 16707,

- la figure 10b est un diagramme comportant les coefficients de trainée d'un profil selon l'invention présentant une épaisseur relative de 7 % et d'un profil classique NACA 16707,
- la figure 11a est un diagramme illustrant les performances globales des différents profils établis selon l'invention et présentant respectivement des épaisseurs relatives de 4 %, 7 %, 12 % et 20 % comparées à la performance d'un profil classique NACA 16707, et ce pendant la phase de décollage,
- la figure 11b est un diagramme illustrant les performances globales des différents profils établis selon l'invention et présentant respectivement des épaisseurs relatives de 4 %, 7 %, 12 % et 20 % comparées à la performance d'un profil classique NACA 16707, et ce pendant la phase de montée,
- la figure 11c est un diagramme illustrant les performances globales des différents profils établis selon l'invention et présentant respectivement des épaisseurs relatives de 4 %, 7 %, 12 % et 20 % comparées à la performance d'un profil classique NACA 16707, et ce pendant la phase de croisière.

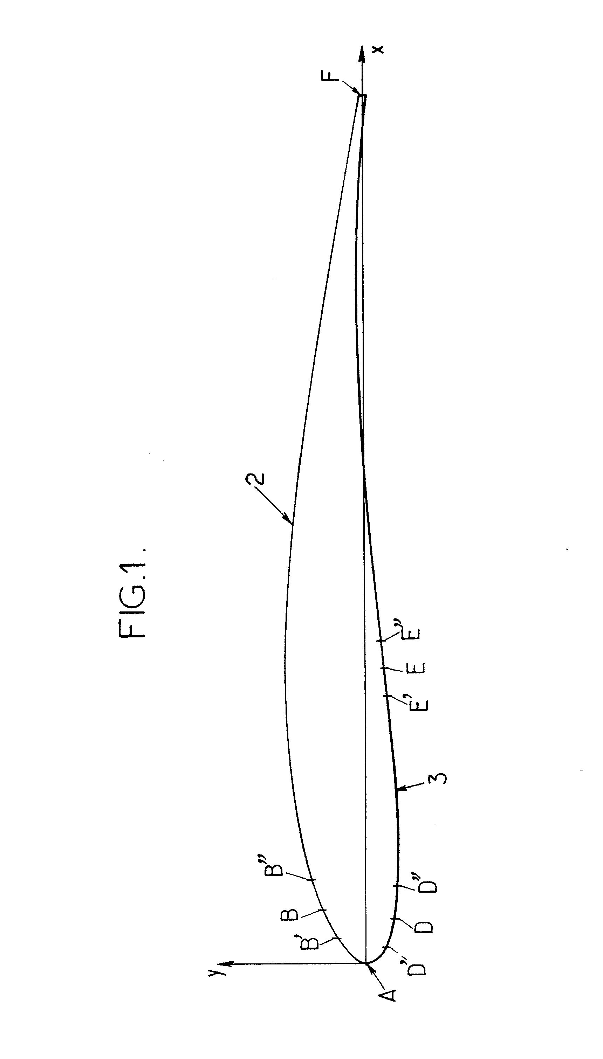

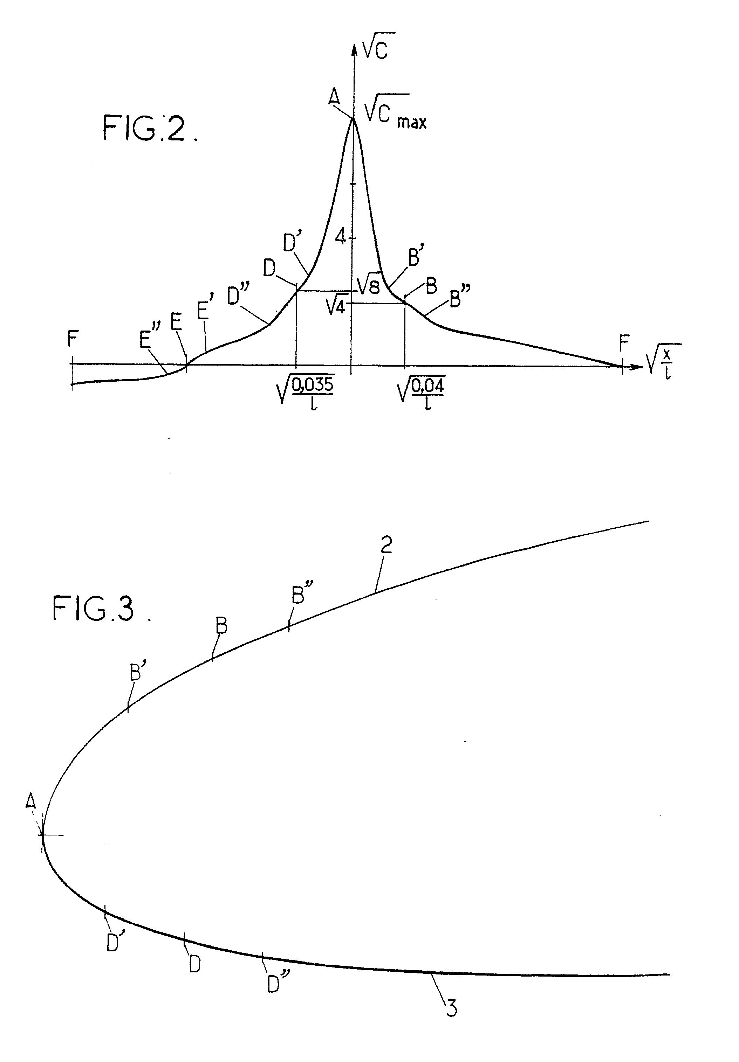

Sur les figures 1 et 2 on a représenté un profil selon l'invention qui présente une épaisseur relative rapportée à la corde comprise entre 3 % et 25 %. L'extrados 2 de ce profil présente une forme convexe entre le bord d'attaque A et le bord de fuite F. L'intrados 3 de ce profil présente une forme d'abord convexe en partant du bord d'attaque A, puis concave en arrivant au bord de fuite F.

la loi d'évolution des courbures de l'extrados 2 est la suivante :
- la courbure, maximale au bord d'attaque A, décroit d'abord rapidement pour atteindre une valeur d'environ 4 en un point B situé à environ 4 % de la longueur de la corde,
- ensuite la courbure décroit régulièrement de ce point B jusqu'au bord de fuite F où la valeur de la courbure devient sensiblement nulle.

La loi d'évolution des courbures de l'intrados 3 est la suivante :
- la courbure, maximale au bord d'attaque A, décroit d'abord rapidement pour atteindre une valeur d'environ 8 en un point D situé à environ 3,5 % de la longueur de la corde,
- ensuite la courbure décroit moins rapidement pour atteindre une valeur nulle en un point E situé entre 10 % et 60 % de la longueur de la corde,
- la courbure décroit encore à partir de ce point d'inflexion E jusqu'à une valeur faiblement négative qui reste alors pratiquement constante jusqu'au bord de fuite F.

Cette loi d'évolution des courbures est représentée sur la figure 2 sur laquelle sont portées :
- en abscisse et du côté positif la longueur x de la corde du profil, représentée par $(x/l)^{1/2}$ ;
- en abscisse et du côté négatif la longueur x de la corde du profil, représentée par $(x/l)^{1/2}$ ; et
- en ordonnée les courbures positives et négatives C représentées par $C^{1/2}$.

La courbe du côté des abscisses positives représente l'évolution des courbures de l'extrados, et la courbe du côté des abscisses négatives représente l'évolution des courbures de l'intrados.

Au niveau du point B sur l'extrados il est prévu une zone de raccordement B'B" s'étendant sur une distance relative de 2 % de part et d'autre de ce point B, et le long de laquelle la courbure de l'extrados évoluefaiblement (les points B' et B" étant donc situés respectivement à environ 2 % et à environ 6 % de la longueur de la corde).

Au niveau du point D sur l'intrados il est prévu une zone de raccordement D'D" s'étendant sur une distance relative de 2 % de part et d'autre de ce point D, et le long de laquelle la courbure de l'intrados évolue faiblement (les points D' et D" étant donc situés respectivement à environ 1,5 % et environ 5,5 % de la longueur de la corde).

Au niveau du point E sur l'intrados il est prévu une zone de raccordement E'E" s'étendant sur une distance relative de 2 % de part et d'autre de ce point E, et le long de laquelle la courbure de l'intrados évolue faiblement.

Avantageusement, ce point E est situé à une abscisse x, ramenée à la corde l, donnée par la formule :

$$(x/l) = 2(e/l) + 0,08$$

Quant à la courbure $C_{max}$ du profil au bord d'attaque A, elle peut avantageusement être calculée par la formule :

$$C_{max} = a_1(e/l) + a_2(e/l)^2 + a_3(e/l)^3 + a_4(e/l)^4$$

dans laquelle
e est l'épaisseur du profil,
l est la corde du profil,
$a_1$ est un coefficient égal à $+ 2.10^3$,
$a_2$ est un coefficient égal à $- 4,576.10^4$,

4

$a_3$ est un coefficient égal à $+ 3,5.10^5$,

$a_4$ est un coefficient égal à $- 8,5.10^5$.

Pour engendrer des profils conformes à l'invention on peut utiliser des formules définissant :

- la ligne moyenne (ou squelette) du profil,
- les épaisseurs du profil comprises de part et d'autre de la ligne moyenne et perpendiculairement à cette ligne moyenne.

A cet effet, on se réferera au système de coordonnées cartésiennes 0x, 0y, montré sur la figure 1, et dans lequel la corde du profil est confondue avec l'axe 0x.

Dans un tel système où les abscisses x et les ordonnées y sont rapportés à la longueur l de la corde, on peut représenter la ligne moyenne et la loi d'épaisseur par des formules mathématiques tenant compte de l'épaisseur relative (e/l) d'un profil (e désignant l'épaisseur et l la corde du profil).

La ligne moyenne peut être représentée par la formule :

$$(y/l) = a_0(x/l))^{1/2} + a_1(x/l) + a_2(x/l)^2 + a_3(x/l)^3 + a_4(x/l)^4 + a_5(x/l)^5$$

Les coefficients $a_0$, $a_1$, $a_2$, $a_3$, $a_4$ et $a_5$ ont les valeurs suivantes dans la gamme des épaisseurs relatives comprises entre 3 % et 25 % :

$$a_0 = 3,2056(e/l) - 110(e/l)^2 + 1018,7(e/l)^3 - 2751,7(e/l)^4$$
$$a_1 = -11,537(e/l) + 500,8(e/l)^2 - 4851,6(e/l)^3 + 13309(e/l)^4$$
$$a_2 = 1,236(e/l)) - 242,27(e/l)^2 + 2803(e/l)^3 - 8315,2(e/l)^4$$
$$a_3 = 38,5(e/l) - 1154,8(e/l)^2 + 9988,3(e/l)^3 - 25693(e/l)^4$$
$$a_4 = -47,99(e/l) + 1547,7(e/l)^2 - 13768(e/l)^3 + 35952(e/l)^4$$
$$a_5 = 16,546(e/l) - 540,04(e/l)^2 + 4797,5(e/l)^3 - 12467(e/l)^4$$

La loi d'épaisseur peut être représentée par la formule :

$$(y/l) = b_0(x/l)^{1/2} + b_1(x/l) + b_2(x/l)^2 + b_3(x/l)^3 + b_4(x/l)^4 + b_5(x/l)^5$$

Les coefficients $b_0$, $b_1$, $b_2$, $b_3$, $b_4$ et $b_5$ ont les valeurs suivantes dans la gamme des épaisseurs relatives comprises entre 3 % et 25 % :

$$b_0 = 3,476(e/l) - 59,16(e/l)^2 + 512,13(e/l)^3 - 1320,4(e/l)^4$$
$$b_1 = -12,34(e/l) + 358,32(e/l)^2 - 3097,1(e/l)^3 + 8017,9(e/l)^4$$
$$b_2 = 48,71(e/l) - 1540,2(e/l)^2 + 13202(e/l)^3 - 34016(e/l)^4$$
$$b_3 = -101,88(e/l) + 3087,6(e/l)^2 - 26339(e/l)^3 + 67587(e/l)^4$$
$$b_4 = 93159(e/l) - 2744,7(e/l)^2 + 23268(e/l)^3 - 59364(e/l)^4$$
$$b_5 = -30,96(e/l) + 896,5(e/l)^2 - 7539,8(e/l)^3 + 19093(e/l)^4$$

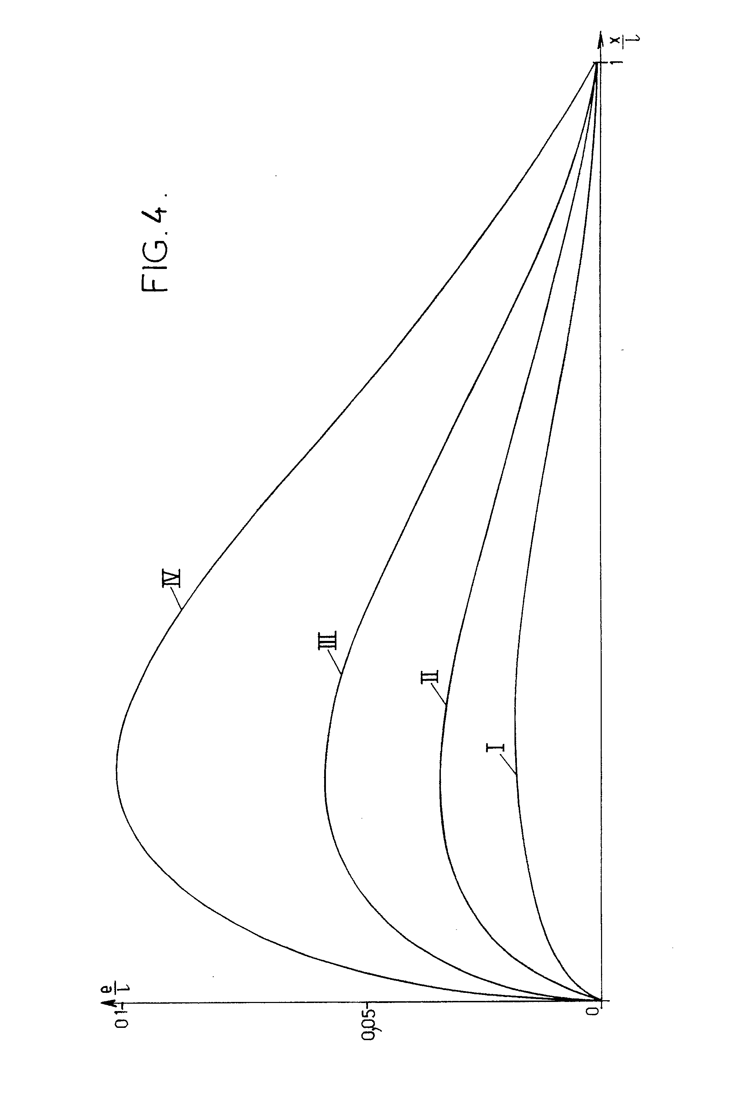

Sur la figure 4 on a tracé les courbes montrant la variation de l'épaisseur (épaisseur e/l rapportée à la corde du profil) en fonction de l'abscisse (abscisse x/l rapporté à la corde du profil).

Les courbes I, II, III, IV correspondant respectivement à des profils d'épaisseurs relatives 4 %, 7 %, 12 % et 20 %.

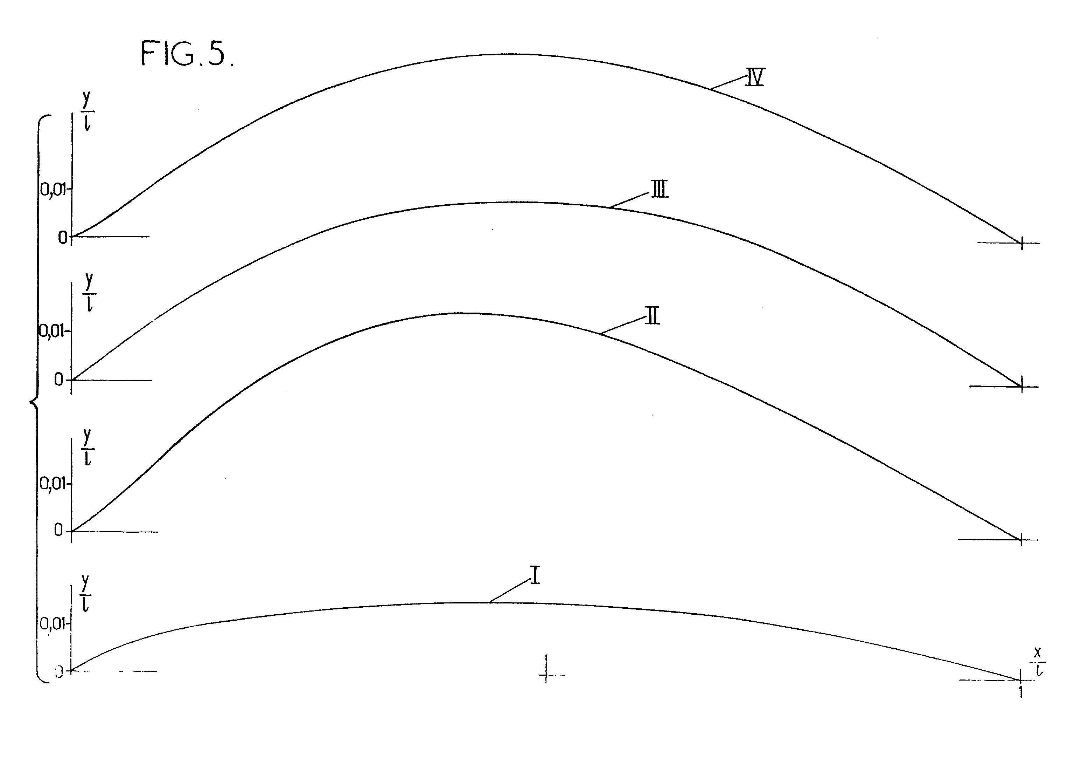

Sur la figure 5 on a tracé les lignes moyennes I, II, III, IV correspondant respectivement à des profils d'épaisseurs relatives 4 %, 7 %, 12 % et 20 %, les coordonnées utilisées sur cette figure 5 étant les abscisses x/l et les ordonnées y/l rapportés à la corde du profil.

En reportant de part et d'autre de la ligne moyenne et perpendiculairement à la ligne moyenne la loi d'épaisseur on obtient donc les coordonnées des profils selon l'invention.

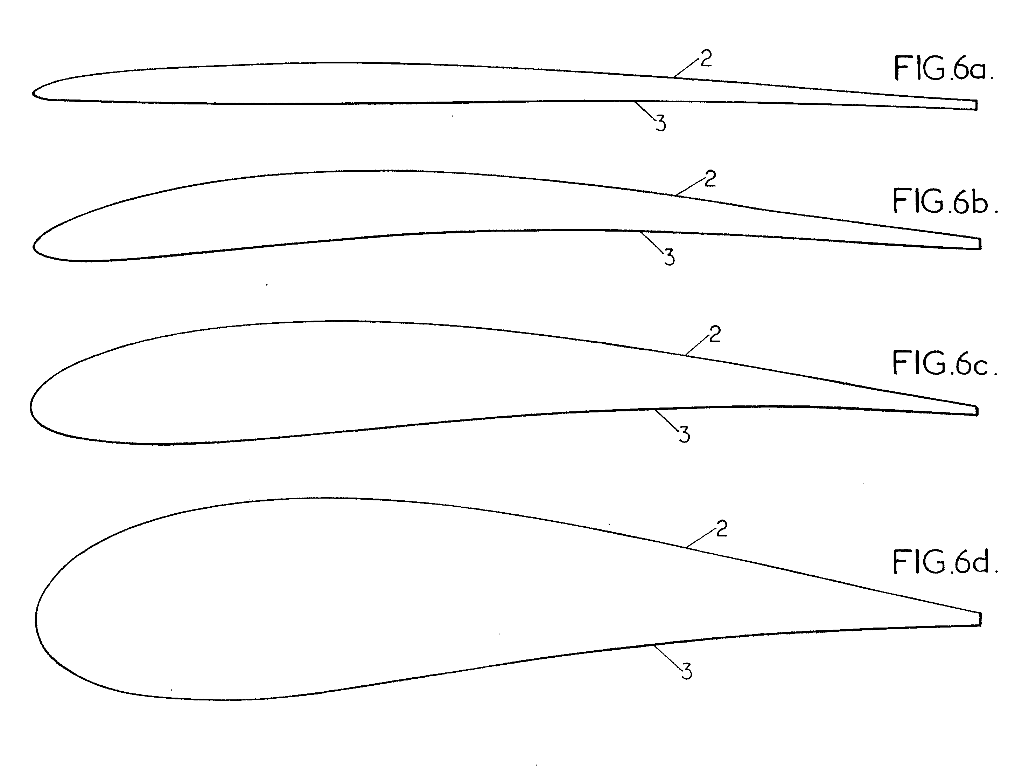

Les figures 6a, 6b, 6c et 6d montrent de tels profils respectivement pour des valeurs de l'épaisseur relative de 4 %, 7 %, 12 % et 20 %.

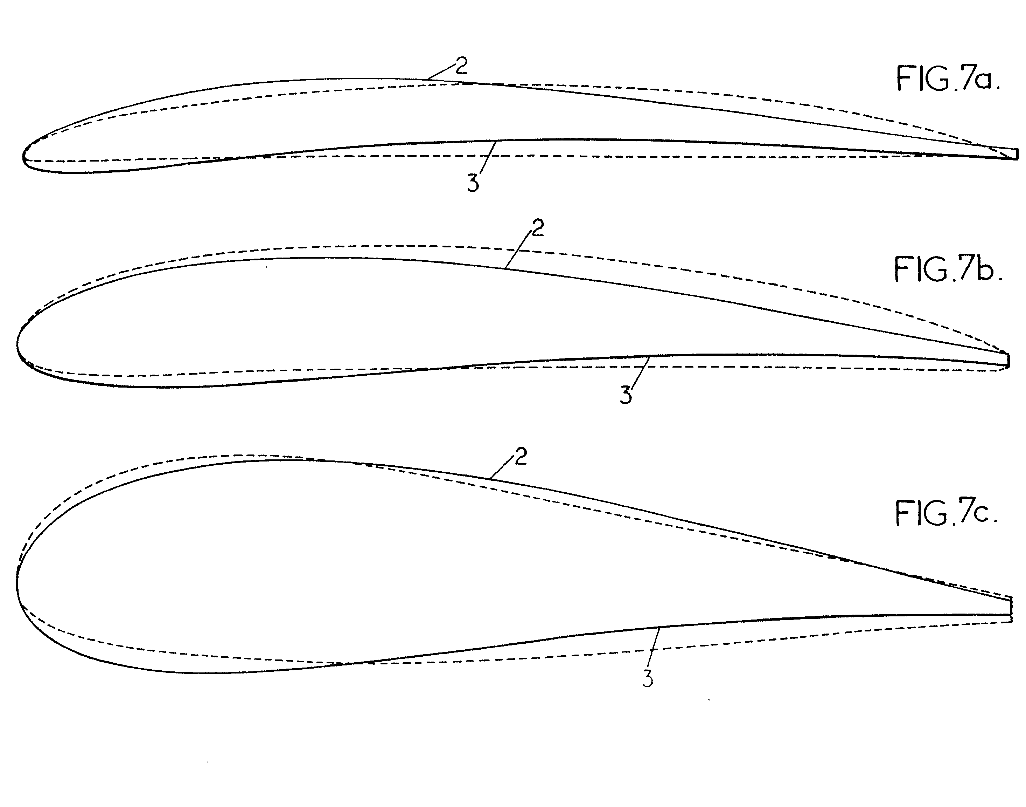

Sur les figure 7a, 7b et 7c on a mis en évidence les différences qui apparaissent clairement entre des profils selon l'invention et des profils classiques.

Sur la figure 7a on a représenté en trait plein un profil selon l'invention présentant une épaisseur relative de 7 % et en pointillés un profil classique du type NACA 16707 et de même épaisseur relative 7 %.

Sur la figure 7b on a représenté en trait plein un profil selon l'invention présentant une épaisseur relative de 12 % et en pointillés un profil classique du type HS1-712 et de même épaisseur relative 12 %.

Sur la figure 7c on a représenté en trait plein un profil selon l'invention présentant une épaisseur relative de 20 % et en pointillés un profil classique du type ARAD 20 et de même épaisseur relative 20 %.

L'évolution des courbures de l'extrados entre les points A et B permet de réduire en valeur absolue le coefficient de pression minimum relatif à l'extrados par rapport au coefficient de pression correspondant au profil classique du type NACA 16.

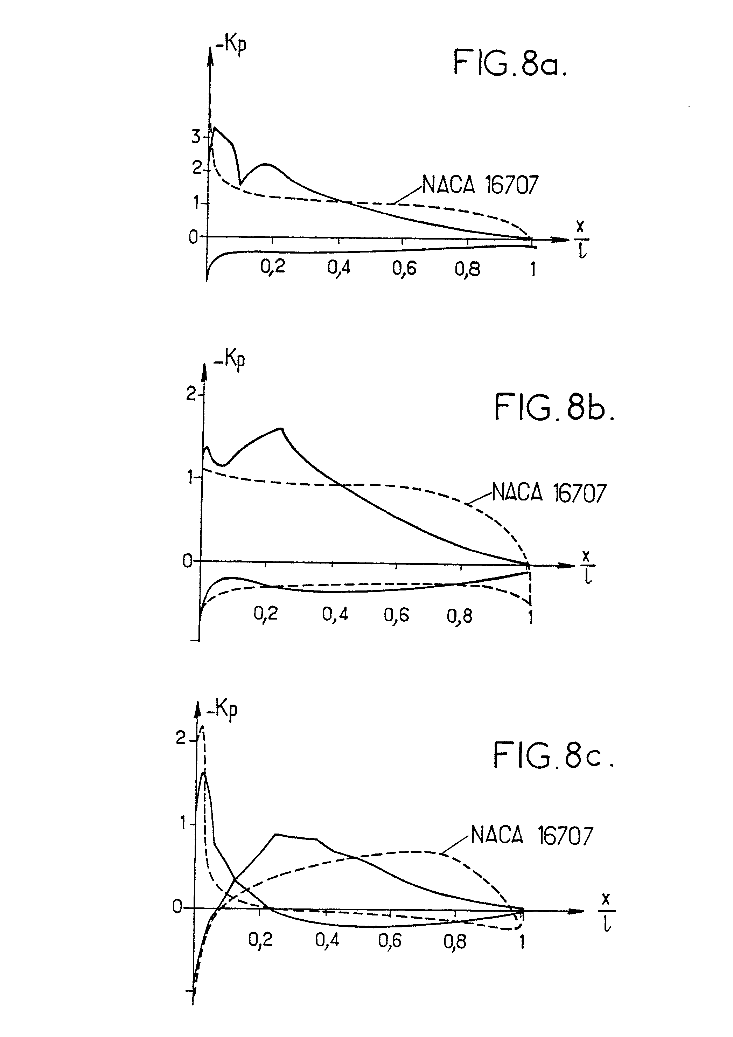

Ceci est particulièrement mis en évidence sur la figure 8a sur laquelle on a porté en abscisse la valeur $x/l$ et en ordonnée le coefficient de pression $K_p$.

Cette figure correspond aux conditions de fonctionnement dans la phase de décollage, la courbe en trait plein correspondant à un profil selon l'invention d'épaisseur relative de 7 % et la courbe en pointillés à un profil classique NACA 16707.

Les conditions de fonctionnement relatives à la phase de décollage correspondent à un nombre de Mach voisin de 0,55 et à un coefficient de portance élevé.

La zone de raccordement B'B" dans laquelle la courbure évolue peu permet d'obtenir dans les mêmes conditions de fonctionnement un phénomène de recompression isentropique de l'écoulement permettant de limiter l'intensité de l'onde de choc au niveau de l'extrados et, par conséquent, d'obtenir des valeurs élevées pour le coefficient de portance maximale.

Sur la figure 8b on a représenté dans les mêmes conditions que sur la figure 8a l'évolution du coefficient de pression dans les conditions de fonctionnement en montée.

L'évolution des courbures dans la région de l'extrados comprise entre le point B et le bord de fuite F permet d'obtenir une recompression progressive de l'écoulement jusqu'au bord de fuite pour toutes les conditions de vol et plus particulièrement en montée. Cette recompression est très faible vers le bord de fuite où la couche limite est épaisse et présente donc une grande sensibilité au phénomène de recompression.

Cette recompression permet d'éviter un décollement de la couche limite et permet d'obtenir de bonnes valeurs du coefficient de finesse qui sont très intéressantes dans les phases de décollage et de montée.

La figure 8c montre dans les mêmes conditions que sur la figure 8a l'évolution du coefficient de pression dans les conditions de fonctionnement en croisière.

L'évolution des courbures de l'intrados entre les points A et D permet d'obtenir des valeurs du coefficient de pression très faibles et, en tout cas, bien inférieures en valeur absolue à celles obtenues par des profils classiques.

L'évolution des courbures de l'intrados entre les points D et E ainsi que dans la zone de raccordement D'D" permet d'obtenir des recompressions de l'écoulement en évitant l'apparition d'ondes de choc.

Enfin, l'évolution des courbures de l'intrados entre le point E et le bord de fuite permet d'obtenir une légère accélération de l'écoulement après le phénomène de recompression et ceci jusqu'au bord de fuite.

L'évolution des courbures de l'intrados du profil permet donc le contrôle de l'écoulement ce qui donne au profil de très bonnes valeurs de finesse pendant la phase de croisière.

Des essais comparatifs effectués dans les mêmes conditions sur des profils conformes à l'invention et d'épaisseurs relatives 4 %, 7 %, 12 % et 20 %, et sur un profil NACA 16707, ont confirmé les bonnes performances des profils selon l'invention par rapport au susdit profil NACA.

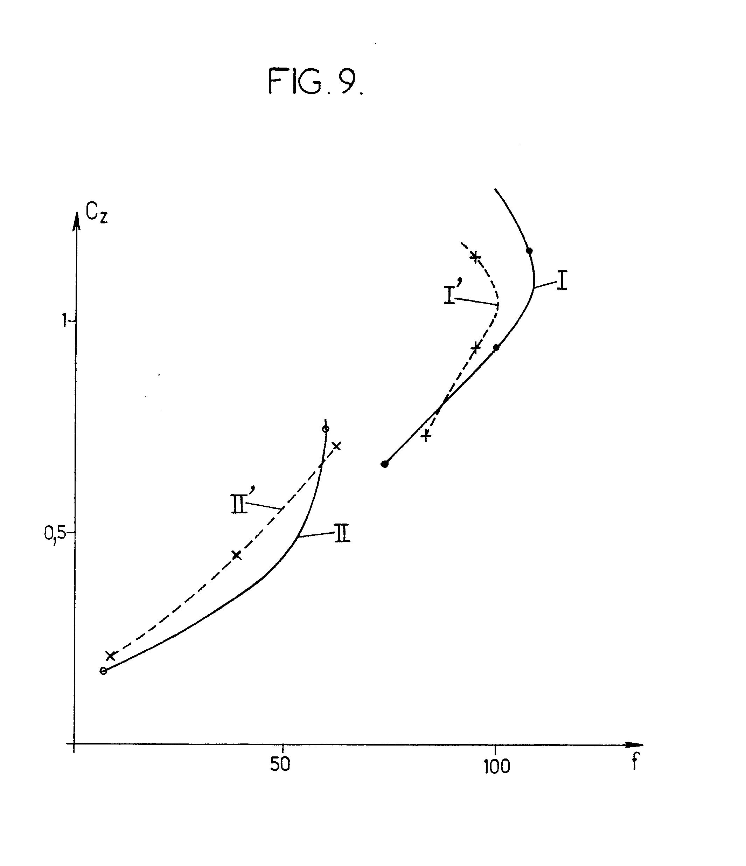

On se reportera à la figure 9 sur laquelle on a porté en abscisse le coefficient de finesse $f = C_z/C_x$, ($C_z$ étant le coefficient de portance et $C_x$ étant le coefficient de trainée) et en ordonnée le coefficient de portance $C_z$.

Sur la figure 9,
- les deux courbes I et II caractérisent un profil selon l'invention, d'épaisseur relative 7 %, respectivement dans les conditions de fonctionnement en phase de montée (courbe I) et dans les conditions de fonctionnement en phase de croisière (courbe II), et
- les deux courbes I et II caractérisent un profil NACA 16707 respectivement dans les conditions en phase de montée (courbe I') et dans les conditions de fonctionnement en phase de croisière (courbe II').

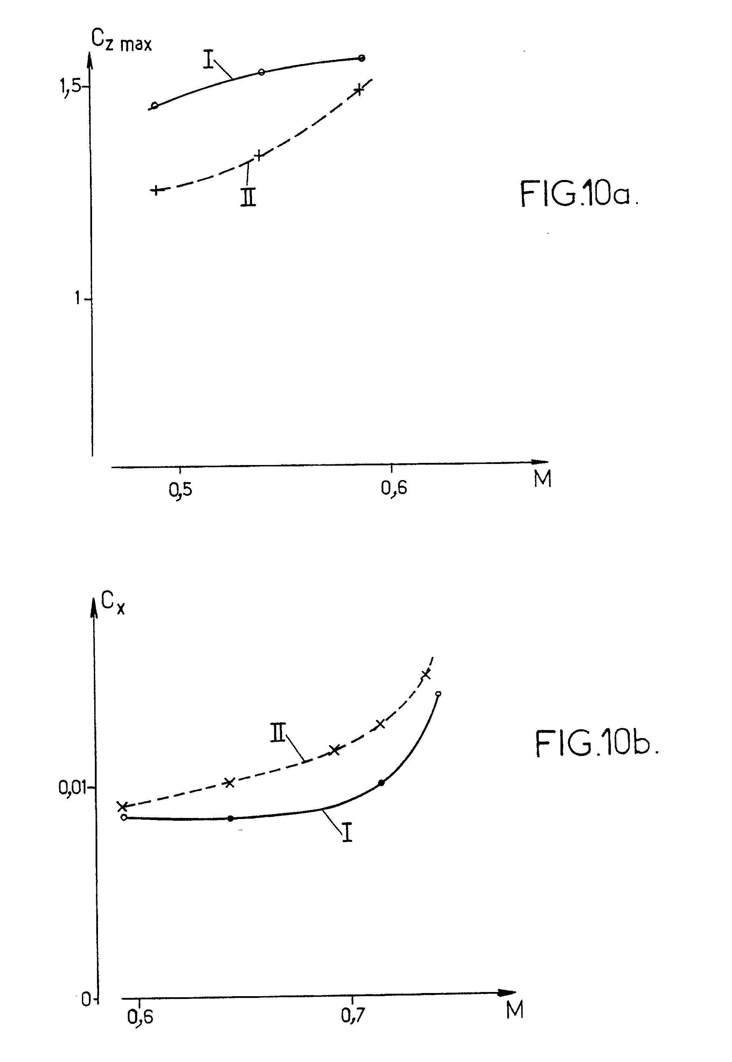

Sur les figures 10a et 10b on a porté en abscisse le nombre de Mach et en ordonnée, sur la figure 10a, le coefficient de portance maximum $C_{z\,max}$ et, sur la figure 10b, le coefficient de trainée $C_x$.

Sur la figure 10a la courbe I est relative à un profil selon l'invention, d'épaisseur relative 7 %, et la courbe II est relative à un profil NACA 16707.

Sur la figure 10b la courbe I est relative à un profil selon l'invention, d'épaisseur relative 7 %, et la courbe II est relative à un profil NACA 16707.

Sur cette figure 10b les courbes de trainée en fonction du nombre de Mach sont établies pour un coefficient de portance d'environ 0,5.

Sur la figure 10a, les nombres de Mach sont représentatifs de ceux rencontrés dans les conditions de fonctionnement dans la phase de décollage et sur la figure 10b, de ceux rencontrés dans les conditions de fonctionnement dans la phase de croisière.

On constate, sur ces figures, que le gain du coefficient de portance maximale est de 15 % pour un nombre de Mach de 0,55 (figure 10a), et que le coefficient de trainée est très inférieur à celui du profil NACA, quel que soit le nombre de Mach.

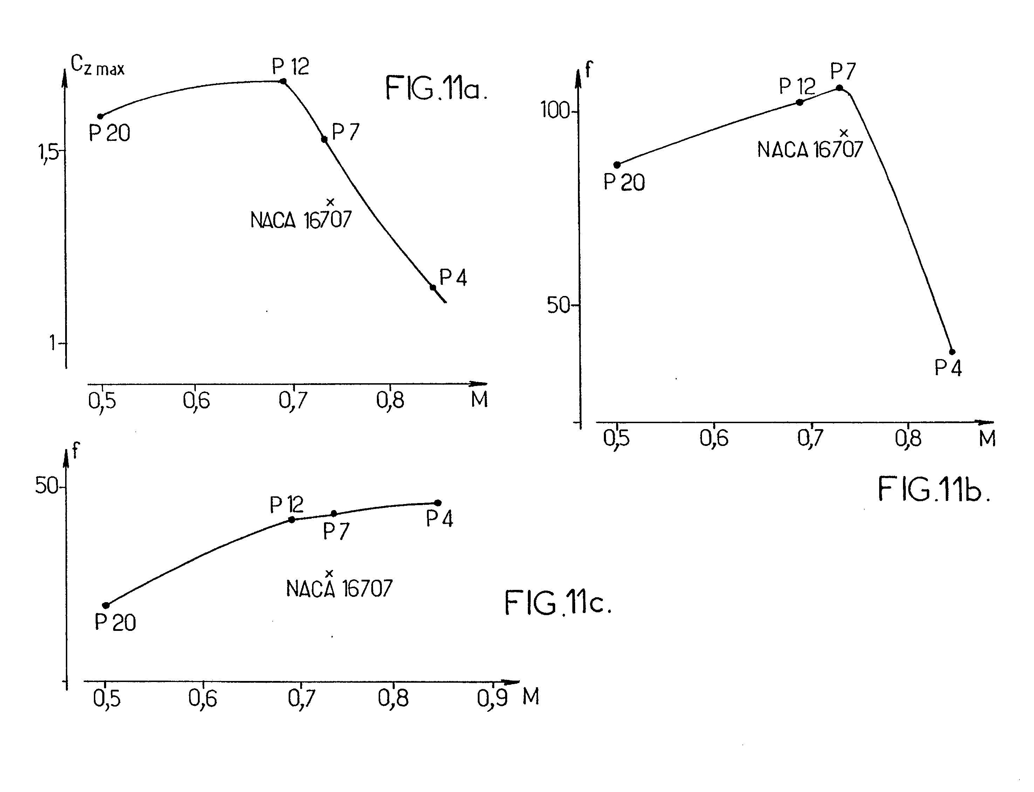

Sur les figures 11a, 11b et 11c on a porté,
- en abscisse le nombre de Mach correspondant à la phase de croisière, et
- en ordonnée :
  - sur la figure 11a le coefficient de portance maximum en phase de décollage,
  - sur la figure 11b le coefficient de finesse en phase de montée,
  - sur la figure 11c le coefficient de finesse en phase de croisière.

Sur ces figures, les courbes sont établies à partir des quatre points de fonctionnement respectivement relatifs aux profils selon l'invention d'épaisseur relative 4 %, 7 %, 12 % et 20 %.

Sur ces mêmes figures le point représenté par une croix correspond au profil NACA 16707.

Ces figures 11a, 11b et 11c montrent bien que pour toutes les conditions de fonctionnement (phase de décollage, phase de montée et phase de croisière) les performances des profils selon l'invention sont supérieures à celles des profils classiques.

Pour engendrer des profils conformes à l'invention on peut également avoir recours aux tableaux de coordonnées suivants concernant des profils d'épaisseurs relatives de 4 %, 7 %, 12 % et 20 % dans lesquels sont données pour l'extrados et pour l'intrados les coordonnées rapportées à la corde, x/l et y/l (dans le système de coordonnées cartésiennes 0x, 0y de la figure 1 dans laquelle la corde est confondue avec l'axe 0x) de points situés sur l'extrados et sur l'intrados des profils.

Le tableau I ci-dessous est relatif à un profil d'épaisseur relative 4 %.

## TABLEAU I

| INTRADOS | | EXTRADOS | |
|---|---|---|---|
| x/1 | y/1 | x/1 | y/1 |
| 1.00000 | -.00100 | .00460 | .00025 |
| .98000 | -.00020 | .00600 | .00354 |
| .96000 | .00060 | .00800 | .00540 |
| .94000 | .00130 | .01000 | .00680 |
| .92000 | .00200 | .01200 | .00800 |
| .90000 | .00270 | .01400 | .00897 |
| .87000 | .00330 | .01700 | .01018 |
| .84000 | .00370 | .02000 | .01122 |
| .81000 | .00400 | .02453 | .01253 |
| .78000 | .00410 | .02958 | .01374 |
| .75000 | .00410 | .03465 | .01480 |
| .72000 | .00400 | .03973 | .01574 |
| .69000 | .00370 | .04480 | .01661 |
| .66000 | .00330 | .04988 | .01744 |
| .63000 | .00280 | .05495 | .01822 |
| .60000 | .00220 | .06511 | .01965 |
| .57000 | .00150 | .07528 | .02097 |
| .54000 | .00080 | .08544 | .02220 |
| .51000 | -.00010 | .09560 | .02335 |
| .48000 | -.00100 | .10577 | .02443 |
| .45000 | -.00190 | .11594 | .02546 |
| .42000 | -.00280 | .12611 | .02642 |
| .39000 | -.00350 | .13628 | .02730 |
| .36000 | -.00410 | .14645 | .02810 |
| .33000 | -.00480 | .15662 | .02885 |
| .30000 | -.00530 | .16680 | .02956 |
| .28000 | -.00580 | .17697 | .03023 |
| .26000 | -.00590 | .18714 | .03085 |
| .24000 | -.00600 | .19732 | .03142 |
| .22000 | -.00610 | .20750 | .03194 |

EP 0 227 524 B1

## TABLEAU I (suite)

| INTRADOS | | EXTRADOS | |
|---|---|---|---|
| x/l | y/l | x/l | y/l |
| .20000 | -.00620 | .23294 | .03305 |
| .18000 | -.00630 | .25838 | .03390 |
| .16000 | -.00650 | .28382 | .03459 |
| .14000 | -.00660 | .30926 | .03520 |
| .12000 | -.00680 | .33469 | .03567 |
| .10000 | -.00690 | .36012 | .03602 |
| .08000 | -.00690 | .38581 | .03630 |
| .06000 | -.00680 | .41145 | .03586 |
| .05000 | -.00678 | .43670 | .03548 |
| .04500 | -.00680 | .46217 | .03509 |
| .04000 | -.00683 | .48767 | .03444 |
| .03500 | -.00684 | .51312 | .03360 |
| .03000 | -.00678 | .53854 | .03261 |
| .02500 | -.00664 | .56392 | .03152 |
| .02000 | -.00644 | .58930 | .03037 |
| .01600 | -.00613 | .62000 | .02950 |
| .01297 | -.00570 | .65000 | .02830 |
| .01000 | _.00497 | .68000 | .02680 |
| .00800 | -.00432 | .71000 | .02540 |
| .00600 | -.00292 | .74000 | .02380 |
| | | .77000 | .02210 |
| | | .80000 | .02040 |
| | | .83000 | .01870 |
| | | .86000 | .01690 |
| | | .89000 | .01500 |
| | | .92000 | .01310 |
| | | .94000 | .01170 |
| | | .96000 | .01030 |
| | | .98000 | .00890 |
| | | 1.00000 | .00800 |

Le tableau II HOR 07 ci-dessous est relatif à un profil d'épaisseur relative de 7 %.

9

## TABLEAU II

| INTRADOS | | EXTRADOS | |
|---|---|---|---|
| x/l | y/l | x/l | y/l |
| 1.00000 | .00020 | .00704 | -.00026 |
| .99500 | .00060 | .01074 | .00837 |
| .99000 | .00091 | .01594 | .01394 |
| .98000 | .00160 | .02107 | .01746 |
| .96000 | .00280 | .02821 | .02141 |
| .94000 | .00410 | .03330 | .02390 |
| .92000 | .00520 | .03889 | .02648 |
| .90000 | .00670 | .04244 | .02795 |
| .87000 | .00840 | .04820 | .03025 |
| .85000 | .00960 | .05300 | .03210 |
| .83000 | .01080 | .06300 | .03564 |
| .80000 | .01240 | .07300 | .03895 |
| .76000 | .01430 | .08097 | .04147 |
| .73000 | .01570 | .09099 | .04459 |
| .70000 | .01680 | .10108 | .04755 |
| .66000 | .01810 | .11123 | .05035 |
| .63000 | .01870 | .12142 | .05299 |
| .60000 | .01900 | .13164 | .05548 |
| .56000 | .01910 | .14190 | .05782 |
| .53000 | .01900 | .15220 | .06002 |
| .50000 | .01860 | .16249 | .06206 |
| .46000 | .01750 | .17277 | .06398 |
| .43000 | .01640 | .18307 | .06577 |
| .40000 | .01510 | .19337 | .06744 |
| .38000 | .01390 | .20368 | .06900 |
| .36000 | .01280 | .22963 | .07241 |

EP 0 227 524 B1

## TABLEAU II (suite)

| INTRADOS | | EXTRADOS | |
|---|---|---|---|
| x/l | y/l | x/l | y/l |
| .34000 | .01110 | .25000 | .07440 |
| .32000 | .00960 | .30000 | .07720 |
| .30000 | .00780 | .35000 | .07820 |
| .26236 | .00437 | .40000 | .07740 |
| .23761 | .00180 | .45000 | .07530 |
| .21277 | -.00097 | .50000 | .07210 |
| .20277 | -.00211 | .55000 | .06750 |
| .19276 | -.00324 | .60000 | .06200 |
| .18274 | -.00435 | .65000 | .05580 |
| .17270 | -.00545 | .70000 | .04900 |
| .16268 | -.00654 | .75000 | .04240 |
| .15266 | -.00762 | .80000 | .03590 |
| .14261 | -.00868 | .85000 | .02920 |
| .13252 | -.00973 | .90000 | .02290 |
| .12239 | -.01075 | .92000 | .02020 |
| .11200 | -.01150 | .95000 | .01630 |
| .10200 | -.01240 | .97000 | .01370 |
| .09200 | -.01315 | .99000 | .01120 |
| .08100 | -.01362 | 1.00000 | .00995 |
| .07200 | -.01380 | | |
| .06000 | -.01380 | | |
| .05000 | -.01360 | | |
| .04000 | -.01310 | | |
| .03500 | -.01279 | | |
| .03000 | -.01225 | | |
| .02500 | -.01154 | | |
| .02000 | -.01054 | | |
| .01514 | -.00905 | | |
| .01022 | -.00657 | | |

Le tableau III HOR 12 est relatif à un profil d'épaisseur relative de 12 %.

11

## TABLEAU III

| INTRADOS | | EXTRADOS | |
|---|---|---|---|
| x/l | y/l | x/l | y/l |
| 1.00000 | -.00220 | 0.00000 | 0.00000 |
| .97957 | -.00014 | .00200 | .00775 |
| .95916 | .00195 | .00400 | .01160 |
| .93875 | .00395 | .00600 | .01450 |
| .91835 | .00522 | .01000 | .01925 |
| .89284 | .00642 | .01400 | .02320 |
| .86734 | .00726 | .01800 | .02650 |
| .84183 | .00788 | .02200 | .02935 |
| .81636 | .00825 | .02659 | .03240 |
| .79094 | .00831 | .03114 | .03541 |
| .76549 | .00807 | .03574 | .03814 |
| .74001 | .00762 | .04039 | .04069 |
| .71454 | .00704 | .04507 | .04315 |
| .68908 | .00634 | .04980 | .04551 |
| .66365 | .00552 | .05937 | .04992 |
| .63829 | .00456 | .06909 | .05401 |
| .61297 | .00343 | .07900 | .05780 |
| .58767 | .00214 | .08901 | .06132 |
| .56246 | .00068 | .09911 | .06459 |
| .53736 | -.00099 | .10928 | .06761 |
| .51235 | -.00292 | .11949 | .07040 |
| .48764 | -.00514 | .12975 | .07299 |
| .46245 | -.00761 | .14007 | .07538 |
| .43755 | -.01022 | .15044 | .07758 |
| .41263 | -.01292 | .16078 | .07958 |
| .38768 | -.01563 | .17110 | .08142 |
| .36272 | -.01830 | .18146 | .08310 |

## TABLEAU III (suite)

| INTRADOS | | EXTRADOS | |
|---|---|---|---|
| x/1 | y/1 | x/1 | y/1 |
| .33738 | -.02087 | .19181 | .08463 |
| .31296 | -.02336 | .20219 | .08601 |
| .28805 | -.02564 | .22835 | .08886 |
| .26330 | -.02773 | .25471 | .09092 |
| .23887 | -.02976 | .28074 | .09223 |
| .21424 | -.03176 | .30662 | .09289 |
| .20432 | -.03250 | .33248 | .09301 |
| .19435 | -.03319 | .35843 | .09260 |
| .18439 | -.03381 | .38425 | .09173 |
| .17440 | -.03435 | .41009 | .09045 |
| .16443 | -.03482 | .43595 | .08880 |
| .15448 | -.03522 | .46183 | .08677 |
| .14448 | -.03553 | .48743 | .08446 |
| .13443 | -.03575 | .51351 | .08187 |
| .12433 | -.03586 | .53928 | .07897 |
| .11419 | -.03584 | .56497 | .07584 |
| .10397 | -.03566 | .59054 | .07249 |
| .09367 | -.03531 | .61603 | .06898 |
| .08326 | -.03475 | .64149 | .06533 |
| .07268 | -.03390 | .66691 | .06154 |
| .06193 | -.03268 | .69227 | .05766 |
| .05650 | -.03188 | .71760 | .05372 |
| .05103 | -.03095 | .74290 | .04972 |
| .04552 | -.02989 | .76821 | .04571 |
| .03996 | -.02859 | .79355 | .04166 |
| .03435 | -.02695 | .81891 | .03753 |
| .02873 | -.02507 | .84423 | .03328 |
| .02084 | -.02248 | .86950 | .02896 |
| .01400 | -.01910 | .89478 | .02460 |

13

## TABLEAU III (suite)

| INTRADOS | | EXTRADOS | |
|---|---|---|---|
| x/l | y/l | x/l | y/l |
| .01000 | -.01640 | .92007 | .02015 |
| .00600 | -.01280 | .94029 | .01655 |
| .00400 | -.01045 | .96051 | .01340 |
| .00200 | -.00680 | .98073 | .01015 |
| | | 1.00092 | .00680 |

Le tableau IV est relatif à un profil d'épaisseur relative de 20 %.

## TABLEAU IV

| INTRADOS | | EXTRADOS | |
|---|---|---|---|
| x/l | y/l | x/l | y/l |
| 1.00000 | .00350 | 0.00000 | .00900 |
| .97000 | .00255 | .00200 | .01970 |
| .95000 | .00195 | .00500 | .02820 |
| .93000 | .00130 | .00700 | .03220 |
| .91000 | .00080 | .01000 | .03730 |
| .89266 | .00002 | .01500 | .04430 |
| .86704 | -.00049 | .02000 | .04990 |
| .84147 | -.00126 | .02500 | .05510 |
| .81598 | -.00237 | .03000 | .05980 |
| .79051 | -.00386 | .04135 | .06932 |
| .76497 | -.00567 | .05497 | .07913 |
| .73942 | -.00771 | .06437 | .08492 |
| .71388 | -.00990 | .07403 | .09022 |
| .68838 | -.01222 | .08389 | .09510 |
| .66297 | -.01469 | .09391 | .09958 |
| .63766 | -.01733 | .10405 | .10371 |
| .61238 | -.02013 | .11428 | .10747 |
| .58719 | -.02311 | .12460 | .11092 |
| .56219 | -.02627 | .13501 | .11409 |
| .53732 | -.02966 | .14550 | .11696 |
| .51279 | -.03335 | .15598 | .11956 |
| .48819 | -.03736 | .16643 | .12190 |
| .46323 | -.04148 | .17692 | .12402 |
| .43864 | -.04568 | .18741 | .12589 |
| .41400 | -.04984 | .19794 | .12755 |
| .38933 | -.05387 | .22463 | .13086 |
| .36468 | -.05768 | .25152 | .13308 |

## TABLEAU IV (suite)

| INTRADOS | | EXTRADOS | |
|---|---|---|---|
| x/1 | y/1 | x/1 | y/1 |
| .34020 | -.06121 | .27823 | .13430 |
| .31555 | -.06443 | .30446 | .13457 |
| .29096 | -.06717 | .33063 | .13403 |
| .26685 | -.06946 | .35696 | .13276 |
| .24292 | -.07146 | .38314 | .13083 |
| .21879 | -.07310 | .40929 | .12833 |
| .20899 | -.07359 | .43547 | .12532 |
| .19915 | -.07395 | .46170 | .12183 |
| .18931 | -.07417 | .48756 | .11797 |
| .17943 | -.07424 | .51378 | .11394 |
| .16958 | -.07415 | .54007 | .10956 |
| .15974 | -.07389 | .56602 | .10492 |
| .14983 | -.07346 | .59184 | .10005 |
| .13982 | -.07284 | .61747 | .09499 |
| .12972 | -.07200 | .64302 | .08978 |
| .11954 | -.07089 | .66853 | .08444 |
| .10923 | -.06950 | .69393 | .07899 |
| .09876 | -.06778 | .71925 | .07349 |
| .08809 | -.06567 | .74454 | .06794 |
| .07717 | -.06308 | .76980 | .06238 |
| .06597 | -.05985 | .79509 | .05686 |
| .06029 | -.05793 | .82044 | .05136 |
| .05456 | -.05580 | .84577 | .04582 |
| .04876 | -.05346 | .87101 | .04024 |
| .04285 | -.05072 | .89621 | .03465 |
| .03688 | -.04742 | .92146 | .02911 |
| .03000 | -.04340 | .94165 | .02461 |
| .02500 | -.03980 | .96186 | .02040 |
| .02000 | -.03590 | .98000 | .01690 |
| .01500 | -.03130 | 1.00000 | .01250 |

## TABLEAU IV (suite)

| INTRADOS | | EXTRADOS | |
|---|---|---|---|
| x/l | y/l | x/l | y/l |
| .01000 | -.02550 | | |
| .00500 | -.01740 | | |
| .00200 | -.01000 | | |

En ce qui concerne l'hélice établie avec les profils selon l'invention, il convient d'indiquer qu'il n'est pas indispensable, pour obtenir les effets favorables mentionnés ci-dessus, que la totalité de la pale de l'hélice présente un profil selon l'invention.

Avantageusement, c'est la partie externe de la pale qui devra présenter le profil selon l'invention.

De préférence pour une pale ayant une envergure de R, les profils de la pale compris entre 0,2R et R seront établis conformément à l'invention.

On donne ci-après des exemples de réalisation d'hélices munies de pales conformes à l'invention.

La géométrie de la pale complète étant définie comme il a été indiqué ci-dessus, on se borne à indiquer les points particuliers de la loi d'épaisseur relative en fonction de la longueur (R) de la pale où celle-ci présente un profil conforme à l'invention, pour trois cas d'application.

Exemple 1 : hélice d'avion.

Hélice à 4 pales, de 5,50 m de diamètre, d'une puissance de 4300 kW à 976 tours/minute. La pale présente les profils suivants :
- à l'emplanture, un profil de raccordement dérivé du profil NACA 64,
- à 0,24 R un profil d'épaisseur relative de 20%,
- à 0,40 R un profil d'épaisseur relative de 12%,
- à 0,65 R un profil d'épaisseur relative de 7%,
- à 0,90 R un profil HOR 04. d'épaisseur relative de 4%,

Exemple 2 : hélice d'avion.

Hélice à 3 pales, de 2,30 m de diamètre, d'une puissance de 400 kW à 2377 tours/minute.
La pale présente les profils suivants :
- à l'emplanture, un profil de raccordement dérivé du profil NACA 64,
- à 0,30 R un profil d'épaisseur relative de 20%,
- à 0,45 R un profil d'épaisseur relative de 12%,
- à 0,60 R un profil d'épaisseur relative de 7%,
- à 0,84 R un profil d'épaisseur relative de 4%.

Exemple 3 : hélice pour éolienne.

Hélice à 2 pales, de 18 m de diamètre, d'une puissance de 100 kW pour une vitesse de vent de 12 mètres/seconde.
La pale présente les profils suivants :
- à l'emplanture, un profil de raccordement dérivé du profil HOR 20,
- à 0,25 R un profil d'épaisseur relative de 20%,
- à 0,70 R un profil d'épaisseur relative de 12%.

**Revendications**

1. Hélice aérienne comportant des pales d'envergure R ayant un profil, au moins à partir d'une région de la pale située au-delà d'un rayon relatif de 0,20R, dont l'épaisseur relative maximale est comprise entre 3 % et 25 %, dont le bord d'attaque présente une courbure maximale, dont le bord de fuite présente une courbure nulle, dont l'extrados présente une forme convexe entre le bord d'attaque et le bord de fuite et dont l'intrados présente une forme d'abord convexe en partant du bord d'attaque puis concave en arrivant au bord de fuite, caractérisé par le fait que les courbures du profil sont les suivantes :

(a) sur l'extrados la courbure décroît entre le bord d'attaque A et le bord de fuite F et présente une valeur d'environ 4 en un point B situé à environ 4 % de la longueur de la corde,

(b) sur l'intrados la courbure décroît entre le bord d'attaque A et un point D situé à environ 3,5 % de la longueur de la corde pour atteindre une valeur de 8 environ à ce point D ; la courbure décroît entre ce point D et le point E de courbure nulle qui est situé entre 10 % et 60 % de la longueur de la corde.

2. Hélice selon la revendication 1, caractérisée par le fait que, de part et d'autre du point B et sur une distance relative de 2 % de part et d'autre de ce point, la courbure de l'extrados évolue entre 5,5 et 8,2 au point B' situé à 2 % de la longueur de la corde et 1,5 et 3,8 pour le point B" situé à 6 % de la longueur de la corde.

3. Hélice selon la revendication 1 ou 2, caractérisée par le fait que, de part et d'autre du point D et sur une distance relative de 2 % de part et d'autre de ce point, la courbure de l'intrados évolue entre 8,2 et 3,5 au point D' situé à 1,5 % de la longueur de la corde et 1 et 6,3 pour le point D" situé à 5,5 % de la longueur de la corde.

4. Hélice selon l'une quelconque des revendications 1 à 3, caractérisé par le fait que, de part et d'autre du point E et sur une distance relative de 2 % de part et d'autre de ce point, la courbure de l'intrados évolue entre 0,16 au point E' situé à - 2 % de la longueur de la corde par rapport au point E et - 0,16 pour le point E" situé à + 2 % de la longueur de la corde par rapport au point E.

5. Hélice selon l'une quelconque des revendications 1 à 4, caractérisée par le fait que le point de la corde où la courbure de l'intrados est nulle a une abscisse X, ramenée à la corde I, donnée par la formule :

$$(x/l) = 2(x/l) + 0,08$$

e étant l'épaisseur du profil,
I étant la corde du profil.

6. Hélice selon l'une quelconque des revendications 1 à 5, caractérisée par le fait que la ligne moyenne du profil représenté par la formule :

$$(y/l) = a_0(x/l)^{1/2} + a_1(x/l) + a_2(x/l)^2 + a_3(x/l)^3 + a_4(x/l)^4 + a_5(x/l)$$

dans laquelle les coefficients

$a_0 = 3,2056(e/l) - 110(e/l)^2 + 1018,7(e/l)^3 - 2751,7(e/l)^4$
$a_1 = -11,537(e/l) + 500,8(e/l)^2 - 4851,6(e/l)^3 + 13309(e/l)^4$
$a_2 = 1,236(e/l) - 242,27(e/l)^2 + 2803(e/l)^3 - 8315,2(e/l)^4$
$a_3 = 38,5(e/l) - 1154,8(e/l)^2 + 9988,3(e/l)^3 - 25693(e/l)^4$
$a_4 = - 47,99(e/l) + 1547,7(e/l)^2 - 13768(e/l)^3 + 35952(e/l)^4$
$a_5 = 16,546(e/l) - 540,04(e/l)^2 + 4797,5(e/l)^3 - 12467(e/l)^4$

et par le fait que la loi d'épaisseur est représentée par la formule :

$$(y/l) = b_0(x/l)^{1/2} + b_1(x/l) + b_2(x/l)^2 + b_3(x/l)^3 + b_4(x/l)^4 + b_5(x/l)^5$$

dans laquelle les coefficients :

$b_0 = 3,476(e/l) - 59,16(e/l)^2 + 512,13(e/l)^3 - 1320,4(e/l)^4$
$b_1 = -12,34(e/l) + 358,32(e/l)^2 - 3097,1(e/l)^3 + 8017,9(e/l)^4$
$b_2 = 48,71(e/l) - 1540,2(e/l)^2 + 13202(e/l)^3 - 34016(e/l)^4$

$b_3 = -101,88(e/l) + 3087,6(e/l)^2 - 26339(e/l)^3 + 67587(e/l)^4$
$b_4 = 93159(e/l) - 2744,7(e/l)^2 + 23268(e/l)^3 - 59364(e/l)^4$
$b_5 = -30,96(e/l) + 896,5(e/l)^2 - 7539,8(e/l)^3 + 19093(e/l)^4$.

7. Hélice selon l'une quelconque des revendications 1 à 5, dont le profil présente une épaisseur relative maximale de 4 %, caractérisée par le fait que le susdit profil est déterminé par les coefficients x/l et y/l pour l'intrados et l'extrados donné ci-dessous :

| INTRADOS | | EXTRADOS | |
|---|---|---|---|
| x/l | y/l | x/l | y/l |
| 1.00000 | -.00100 | .00460 | .00025 |
| .98000 | -.00020 | .00600 | .00354 |
| .96000 | .00060 | .00800 | .00540 |
| .94000 | .00130 | .01000 | .00680 |
| .92000 | .00200 | .01200 | .00800 |
| .90000 | .00270 | .01400 | .00897 |
| .87000 | .00330 | .01700 | .01018 |
| .84000 | .00370 | .02000 | .01122 |
| .81000 | .00400 | .02453 | .01253 |
| .78000 | .00410 | .02958 | .01374 |
| .75000 | .00410 | .03465 | .01480 |
| .72000 | .00400 | .03973 | .01574 |
| .69000 | .00370 | .04480 | .01661 |
| .66000 | .00330 | .04988 | .01744 |
| .63000 | .00280 | .05495 | .01822 |
| .60000 | .00220 | .06511 | .01965 |
| .57000 | .00150 | .07528 | .02097 |
| .54000 | .00080 | .08544 | .02220 |
| .51000 | -.00010 | .09560 | .02335 |
| .48000 | -.00100 | .10577 | .02443 |
| .45000 | -.00190 | .11594 | .02546 |
| .42000 | -.00280 | .12611 | .02642 |
| .39000 | -.00350 | .13628 | .02730 |
| .36000 | -.00410 | .14645 | .02810 |
| .33000 | -.00480 | .15662 | .02885 |
| .30000 | -.00530 | .16680 | .02956 |
| .28000 | -.00580 | .17697 | .03023 |
| .26000 | -.00590 | .18714 | .03085 |
| .24000 | -.00600 | .19732 | .03142 |
| .22000 | -.00610 | .20750 | .03194 |
| .20000 | -.00620 | .23294 | .03305 |
| .18000 | -.00630 | .25838 | .03390 |
| .16000 | -.00650 | .28382 | .03459 |

|  | INTRADOS |  |  | EXTRADOS |  |
|---|---|---|---|---|---|
|  | x/l | y/l |  | x/l | y/l |
|  | .14000 | -.00660 |  | .30926 | .03520 |
|  | .12000 | -.00680 |  | .33469 | .03567 |
|  | .10000 | -.00690 |  | .36012 | .03602 |
|  | .08000 | -.00690 |  | .38581 | .03630 |
|  | .06000 | -.00680 |  | .41145 | .03586 |
|  | .05000 | -.00678 |  | .43670 | .03548 |
|  | .04500 | -.00680 |  | .46217 | .03509 |
|  | .04000 | -.00683 |  | .48767 | .03444 |
|  | .03500 | -.00684 |  | .51312 | .03360 |
|  | .03000 | -.00678 |  | .53854 | .03261 |
|  | .02500 | -.00664 |  | .56392 | .03152 |
|  | .02000 | -.00644 |  | .58930 | .03037 |
|  | .01600 | -.00613 |  | .62000 | .02950 |
|  | .01297 | -.00570 |  | .65000 | .02830 |
|  | .01000 | -.00497 |  | .68000 | .02680 |
|  | .00800 | -.00432 |  | .71000 | .02540 |
|  | .00600 | -.00292 |  | .74000 | .02380 |
|  |  |  |  | .77000 | .02210 |
|  |  |  |  | .80000 | .02040 |
|  |  |  |  | .83000 | .01870 |
|  |  |  |  | .86000 | .01690 |
|  |  |  |  | .89000 | .01500 |
|  |  |  |  | .92000 | .01310 |
|  |  |  |  | .94000 | .01170 |
|  |  |  |  | .96000 | .01030 |
|  |  |  |  | .98000 | .00890 |
|  |  |  | 1.00000 | .00800 |

8. Hélice selon l'une quelconque des revendications 1 à 5, dont le profil présente une épaisseur relative maximale de 7 %, caractérisée par le fait que le susdit profil est déterminé par les coefficients x/l et y/l pour l'intrados et l'extrados donnés ci-dessous :

32

| INTRADOS | | EXTRADOS | |
|---|---|---|---|
| x/l | y/l | x/l | y/l |
| 1.00000 | .00020 | .00704 | -.00026 |
| .99500 | .00060 | .01074 | .00837 |
| .99000 | .00091 | .01594 | .01394 |
| .98000 | .00160 | .02107 | .01746 |
| .96000 | .00280 | .02821 | .02141 |
| .94000 | .00410 | .03330 | .02390 |
| .92000 | .00520 | .03889 | .02648 |
| .90000 | .00670 | .04244 | .02795 |
| .87000 | .00840 | .04820 | .03025 |
| .85000 | .00960 | .05300 | .03210 |
| .83000 | .01080 | .06300 | .03564 |
| .80000 | .01240 | .07300 | .03895 |
| .76000 | .01430 | .08097 | .04147 |
| .73000 | .01570 | .09099 | .04459 |
| .70000 | .01680 | .10108 | .04755 |
| .66000 | .01810 | .11123 | .05035 |
| .63000 | .01870 | .12142 | .05299 |
| .60000 | .01900 | .13164 | .05548 |
| .56000 | .01910 | .14190 | .05782 |
| .53000 | .01900 | .15220 | .06002 |
| .50000 | .01860 | .16249 | .06206 |
| .46000 | .01750 | .17277 | .06398 |
| .43000 | .01640 | .18307 | .06577 |
| .40000 | .01510 | .19337 | .06744 |
| .38000 | .01390 | .20368 | .06900 |
| .36000 | .01280 | .22963 | .07241 |
| .34000 | .01110 | .25000 | .07440 |
| .32000 | .00960 | .30000 | .07720 |
| .30000 | .00780 | .35000 | .07820 |
| .26236 | .00437 | .40000 | .07740 |
| .23761 | .00180 | .45000 | .07530 |
| .21277 | -.00097 | .50000 | .07210 |
| 20277 | - 00211 | 55000 | .06750 |

|  | INTRADOS | | EXTRADOS | |
|---|---|---|---|---|
|  | x/l | y/l | x/l | y/l |
|  | .19276 | -.00324 | .60000 | .06200 |
|  | .18274 | -.00435 | .65000 | .05580 |
|  | .17270 | -.00545 | .70000 | .04900 |
|  | .16268 | -.00654 | .75000 | .04240 |
|  | .15266 | -.00762 | .80000 | .03590 |
|  | .14261 | -.00868 | .85000 | .02920 |
|  | .13252 | -.00973 | .90000 | .02290 |
|  | .12239 | -.01075 | .92000 | .02020 |
|  | .11200 | -.01150 | .95000 | .01630 |
|  | .10200 | -.01240 | .97000 | .01370 |
|  | .09200 | -.01315 | .99000 | .01120 |
|  | .08100 | -.01362 | 1.00000 | .00995 |
|  | .07200 | -.01380 |  |  |
|  | .06000 | -.01380 |  |  |
|  | .05000 | -.01360 |  |  |
|  | .04000 | -.01310 |  |  |
|  | .03500 | -.01279 |  |  |
|  | .03000 | -.01225 |  |  |
|  | .02500 | -.01154 |  |  |
|  | .02000 | -.01054 |  |  |
|  | .01514 | -.00905 |  |  |
|  | .01022 | -.00657 |  |  |

9. Hélice selon l'une quelconque des revendications 1 à 5, dont le profil présente une épaisseur relative maximale de 12 %, caractérisée par le fait que le susdit profil est déterminé par les coefficients x/l et y/l pour l'intrados et l'extrados donnés ci-dessous :

23

EP 0 227 524 B1

| INTRADOS | | EXTRADOS | |
| --- | --- | --- | --- |
| x/l | y/l | x/l | y/l |
| 1.00000 | -.00220 | 0.00000 | 0.00000 |
| .97957 | -.00014 | .00200 | .00775 |
| .95916 | .00195 | .00400 | .01160 |
| .93875 | .00395 | .00600 | .01450 |
| .91835 | .00522 | .01000 | .01925 |
| .89284 | .00642 | .01400 | .02320 |
| .86734 | .00726 | .01800 | .02650 |
| .84183 | .00788 | .02200 | .02935 |
| .81636 | .00825 | .02659 | .03240 |
| .79094 | .00831 | .03114 | .03541 |
| .76549 | .00807 | .03574 | .03814 |
| .74001 | .00762 | .04039 | .04069 |
| .71454 | .00704 | .04507 | .04315 |
| .68908 | .00634 | .04980 | .04551 |
| .66365 | .00552 | .05937 | .04992 |
| .63829 | .00456 | .06909 | .05401 |
| .61297 | .00343 | .07900 | .05780 |
| .58767 | .00214 | .08901 | .06132 |
| .56246 | .00068 | .09911 | .06459 |
| .53736 | -.00099 | .10928 | .06761 |
| .51235 | -.00292 | .11949 | .07040 |
| .48764 | -.00514 | .12975 | .07299 |
| .46245 | -.00761 | .14007 | .07538 |
| .43755 | -.01022 | .15044 | .07758 |
| .41263 | -.01292 | .16078 | .07958 |
| .38768 | -.01563 | .17110 | .08142 |
| .36272 | -.01830 | .18146 | .08310 |
| .33738 | -.02087 | .19181 | .08463 |
| .31296 | -.02336 | .20219 | .08601 |
| .28805 | -.02564 | .22835 | .08886 |
| .26330 | -.02773 | .25471 | .09092 |
| .23887 | -.02976 | .28074 | .09223 |
| .21424 | -.03176 | .30662 | .09289 |

24

| INTRADOS | | EXTRADOS | |
|---|---|---|---|
| x/l | y/l | x/l | y/l |
| .20432 | −.03250 | .33248 | .09301 |
| .19435 | −.03319 | .35843 | .09260 |
| .18439 | −.03381 | .38425 | .09173 |
| .17440 | −.03435 | .41009 | .09045 |
| .16443 | −.03482 | .43595 | .08880 |
| .15448 | −.03522 | .46183 | .08677 |
| .14448 | −.03553 | .48743 | .08446 |
| .13443 | −.03575 | .51351 | .08187 |
| .12433 | −.03586 | .53928 | .07897 |
| .11419 | −.03584 | .56497 | .07584 |
| .10397 | −.03566 | .59054 | .07249 |
| .09367 | −.03531 | .61603 | .06898 |
| .08326 | −.03475 | .64149 | .06533 |
| .07268 | −.03390 | .66691 | .06154 |
| .06193 | −.03268 | .69227 | .05766 |
| .05650 | −.03188 | .71760 | .05372 |
| .05103 | −.03095 | .74290 | .04972 |
| .04552 | −.02989 | .76821 | .04571 |
| .03996 | −.02859 | .79355 | .04166 |
| .03435 | −.02695 | .81891 | .03753 |
| .02873 | −.02507 | .84423 | .03328 |
| .02084 | −.02248 | .86950 | .02896 |
| .01400 | −.01910 | .89478 | .02460 |
| .01000 | −.01640 | .92007 | .02015 |
| .00600 | −.01280 | .94029 | .01655 |
| .00400 | −.01045 | .96051 | .01340 |
| .00200 | −.00680 | .98073 | .01015 |
| | | 1.00092 | .00680 |

10. Hélice selon l'une quelconque des revendications 1 à 5, dont le profil présente une épaisseur relative maximale de 20 %, caractérisée par le fait que le susdit profil est déterminé par les coefficients x/l et y/l pour l'intrados et l'extrados donnés ci-dessous :

| INTRADOS | | EXTRADOS | |
| --- | --- | --- | --- |
| x/l | y/l | x/l | y/l |
| 1.00000 | .00350 | 0.00000 | .00900 |
| .97000 | .00255 | .00200 | .01970 |
| .95000 | .00195 | .00500 | .02820 |
| .93000 | .00130 | .00700 | .03220 |
| .91000 | .00080 | .01000 | .03730 |
| .89266 | .00002 | .01500 | .04430 |
| .86704 | -.00049 | .02000 | .04990 |
| .84147 | -.00126 | .02500 | .05510 |
| .81598 | -.00237 | .03000 | .05980 |
| .79051 | -.00386 | .04135 | .06932 |
| .76497 | -.00567 | .05497 | .07913 |
| .73942 | -.00771 | .06437 | .08492 |
| .71388 | -.00990 | .07403 | .09022 |
| .68838 | -.01222 | .08389 | .09510 |
| .66297 | -.01469 | .09391 | .09958 |
| .63766 | -.01733 | .10405 | .10371 |
| .61238 | -.02013 | .11428 | .10747 |
| .58719 | -.02311 | .12460 | .11092 |
| .56219 | -.02627 | .13501 | .11409 |
| .53732 | -.02966 | .14550 | .11696 |
| .51279 | -.03335 | .15598 | .11956 |
| .48819 | -.03736 | .16643 | .12190 |
| .46323 | -.04148 | .17692 | .12402 |
| .43864 | -.04568 | .18741 | .12589 |
| .41400 | -.04984 | .19794 | .12755 |
| .38933 | -.05387 | .22463 | .13086 |
| .36468 | -.05768 | .25152 | .13308 |
| .34020 | -.06121 | .27823 | .13430 |
| .31555 | -.06443 | .30446 | .13457 |
| .29096 | -.06717 | .33063 | .13403 |
| .26685 | -.06946 | .35696 | .13276 |
| .24292 | -.07146 | .38314 | .13083 |
| .21879 | -.07310 | .40929 | .12833 |
| .20899 | -.07359 | .43547 | .12532 |

EP 0 227 524 B1

| INTRADOS | | EXTRADOS | |
|---|---|---|---|
| x/l | y/l | x/l | y/l |
| .19915 | -.07395 | .46170 | .12183 |
| .18931 | -.07417 | .48756 | .11797 |
| .17943 | -.07424 | .51378 | .11394 |
| .16958 | -.07415 | .54007 | .10956 |
| .15974 | -.07389 | .56602 | .10492 |
| .14983 | -.07346 | .59184 | .10005 |
| .13982 | -.07284 | .61747 | .09499 |
| .12972 | -.07200 | .64302 | .08978 |
| .11954 | -.07089 | .66853 | .08444 |
| .10923 | -.06950 | .69393 | .07899 |
| .09876 | -.06778 | .71925 | .07349 |
| .08809 | -.06567 | .74454 | .06794 |
| .07717 | -.06308 | .76980 | .06238 |
| .06597 | -.05985 | .79509 | .05686 |
| .06029 | -.05793 | .82044 | .05136 |
| .05456 | -.05580 | .84577 | .04582 |
| .04876 | -.05346 | .87101 | .04024 |
| .04285 | -.05072 | .89621 | .03465 |
| .03688 | -.04742 | .92146 | .02911 |
| .03000 | -.04340 | .94165 | .02461 |
| .02500 | -.03980 | .96186 | .02040 |
| .02000 | -.03590 | .98000 | .01690 |
| .01500 | -.03130 | 1.00000 | .01250 |
| .01000 | -.02550 | | |
| .00500 | -.01740 | | |
| .00200 | -.01000 | | |

11. Hélice selon la revendication 1, caractérisée par le fait que de part et d'autre du point B et sur une distance relative de 2 % de part et d'autre de ce point, la courbure de l'extrados évolue entre
- le point B' situé à 2 % de la longueur de la corde, où la courbure s'exprime en fonction de l'épaisseur relative maximale (e/l) par la relation suivante :

$$C_B' = 287{,}91(e/l) - 5172{,}1(e/l)^2 + 39594(e/l)^3 - 99582(e/l)^4$$

- et le point B" situé à 6 % de la longueur de la corde où la courbure s'exprime en fonction de l'épaisseur relative maximale (e/l) par la relation suivante :

$$C_B'' = 71{,}596(e/l) - 1193{,}3(e/l)\,2 + 10661(e/l)^3 - 30048(e/l)^4$$

12. Hélice selon la revendication 1 ou 2, caractérisée par le fait que, de part et d'autre du point D et sur une distance relative de 2 % de part et d'autre de ce point, la courbure de l'intrados évolue entre
   - le point D' situé à 1,5 % de la longueur de la corde où la courbure s'exprime en fonction de l'épaisseur relative maximale (e/l) par la relation suivante :

$$C_D' = 704{,}62(e/l) - 17922(e/l)^2 + 150080(e/l)^3 - 388830(e/l)^4$$

   - et le point D" situé à 5,5 % de la longueur de la corde où la courbure s'exprime en fonction de l'épaisseur relative maximale (e/l) par la relation suivante :

$$C_D'' = -93{,}605(e/l) + 4398{,}5(e/l)^2 - 40076(e/l)^3 + 106020(e/l)^4$$

13. Hélice selon l'une quelconque des revendications 1 à 12, caractérisée par le fait que chaque pale comporte :
   - jusqu'à 0,20R un profil cylindrique ;
   - entre 0,20R et 0,35R un profil d'épaisseur relative de 20 % ;
   - entre 0,35R et 0,65R un profil d'épaisseur relative de 15 % ;
   - entre 0,65R et 0,75R un profil d'épaisseur relative de 12 % ;
   - entre 0,75R et R un profil d'épaisseur relative de 10 %.

14. Hélice selon l'une quelconque des revendications 1 à 12, caractérisée par le fait que chaque pale comporte :
   - jusqu'à 0,20R un profil cylindrique ;
   - entre 0,20R et 0,35R un profil d'épaisseur relative de 20 % ;
   - entre 0,35R et 0,55R un profil d'épaisseur relative de 12 % ;
   - entre 0,55R et 0,70R un profil d'épaisseur relative de 7 % ;
   - entre 0,70R et 0,80R un profil d'épaisseur relative de 6 % ;
   - entre 0,80R et 0,95R un profil d'épaisseur relative de 4 % ;
   - entre 0,95R et R un profil d'épaisseur relative de 3 %.

## Claims

1. Air propeller comprising blades with span R having a profile, at least from a region of the blade situated beyond a relative radius of 0.20R, whose maximum relative thickness lies between 3% and 25%, whose leading edge has a maximum curvature, whose trailing edge has a zero curvature, whose upper surface has a convex shape between the leading edge and the trailing edge and whose lower surface has a shape which is first convex starting from the leading edge and then concave arriving at the trailing edge, characterised in that the curvatures of the profiles are as follows:
   (a) over the upper surface, the curvature decreases between the leading edge A and the trailing edge F and has a value of about 4 at a point B situated at about 4% of the chord length,
   (b) over the lower surface, the curvature decreases between the leading edge A and a point D situated at about 3.5% of the chord length to attain a value of about 8 at this point D; the curvature decreases between this point D and the point E of zero curvature which is situated between 10% and 60% of the chord length.

2. Propeller according to Claim 1, characterised in that, on both sides of the point B and over a relative distance of 2% on both sides of this point, the curvature of the upper surface varies between 5.5 and 8.2 at the point B' situated at 2% of the chord length, and 1.5 and 3.8 for the point B" situated at 6% of the chord length.

3. Propeller according to Claim 1 or 2, characterised in that, on both sides of the point D and over a relative distance of 2% on both sides of this point, the curvature of the lower surface varies between 8.2 and 3.5 at the point D' situated at 1.5% of the chord length and 1 and 6.3 for the point D" situated at 5.5% of the chord length.

4. Propeller according to any one of Claims 1 to 3, characterised in that, on both sides of the point E and over a relative distance of 2% on both sides of this point, the curvature of the lower surface varies between 0.16 at the point E' situated at -2% of the chord length with respect to the point E and -0.16 for the point E" situated at +2% of the chord length with respect to the point E.

5. Propeller according to any one of Claims 1 to 4, characterised in that the point of the chord where the curvature of the lower surface is zero has an abscissa X relative to the chord l, given by the formula:

$$(x/l) = 2(x/l) + 0.08$$

e being the thickness of the profile,
l being the chord of the profile.

6. Propeller according to any one of claims 1 to 5, characterised in that the median line of the profile is represented by the formula:

$$(y/l) = a_0(x/l)^{\frac{1}{2}} + a_1(x/l) + a_2(x/l)^2 + a_3(x/l)^3 + a_4(x/l)^4 + a_5(x/l)^5$$

in which the coefficients

$a_0 = 3.2056(e/l) - 110(e/l)^2 + 1018.7(e/l)^3 - 2751.7(e/l)^4$
$a_1 = -11.537(e/l) + 500.8(e/l)^2 - 4851.6(e/l)^3 + 13309(e/l)^4$
$a_2 = 1.236(e/l) - 242.27(e/l)^2 + 2803(e/l)^3 - 8315.2(e/l)^4$
$a_3 = 38.5(e/l) - 1154.8(e/l)^2 + 9988.3(e/l)^3 - 25693(e/l)^4$
$a_4 = -47.99(e/l) + 1547.7(e/l)^2 - 13768(e/l)^3 + 35952(e/l)^4$
$a_5 = 16.546(e/l) - 540.04(e/l)^2 + 4797.5(e/l)^3 - 12467(e/l)^4$

and in that the law governing the thickness is represented by the formula:

$$(y/l) = b_0(x/l)^{\frac{1}{2}} + b_1(x/l) + b_2(x/l)^2 + b_3(x/l)^3 + b_4(x/l)^4 + b_5(x/l)^5$$

in which the coefficients:

$b_0 = 3.476(e/l) - 59.16(e/l)^2 + 512.13(e/l)^3 - 1320.4(e/l)^4$
$b_1 = -12.34(e/l) + 358.32(e/l)^2 - 3097.1(e/l)^3 + 8017.9(e/l)^4$
$b_2 = 48.71(e/l) - 1540.2(e/l)^2 + 13202(e/l)^3 - 34016(e/l)^4$
$b_3 = -101.88(e/l) + 3087.6(e/l)^2 - 26339(e/l)^3 + 67587(e/l)^4$
$b_4 = 93159(e/l) - 2744.7(e/l)^2 + 23266(e/l)^3 - 59364(e/l)^4$
$b_5 = -30.96(e/l) + 896.5(e/l)^2 - 7539.8(e/l)^3 + 19093(e/l)^4$

7. Propeller according to any one of Claims 1 to 5, whose profile has a maximum relative thickness of 4%, characterised in that the aforesaid profile is determined by the coefficients x/l and y/l for the lower surface and the upper surface given below:

| LOWER SURFACE | | UPPER SURFACE | |
|---|---|---|---|
| x/l | y/l | x/l | y/l |
| 1.00000 | -.00100 | .00460 | .00025 |
| .98000 | -.00020 | .00600 | .00354 |
| .96000 | .00060 | .00800 | .00540 |
| .94000 | .00130 | .01000 | .00680 |
| .92000 | .00200 | .01200 | .00800 |
| .90000 | .00270 | .01400 | .00897 |
| .87000 | .00330 | .01700 | .01018 |
| .84000 | .00370 | .02000 | .01122 |
| .81000 | .00400 | .02453 | .01253 |
| .78000 | .00410 | .02958 | .01374 |
| .75000 | .00410 | .03465 | .01480 |
| .72000 | .00400 | .03973 | .01574 |
| .69000 | .00370 | .04480 | .01661 |
| .66000 | .00330 | .04988 | .01744 |
| .63000 | .00280 | .05495 | .01822 |
| .60000 | .00220 | .06511 | .01965 |
| .57000 | .00150 | .07528 | .02097 |
| .54000 | .00080 | .08544 | .02220 |
| .51000 | -.00010 | .09560 | .02335 |
| .48000 | -.00100 | .10577 | .02443 |
| .45000 | -.00190 | .11594 | .02546 |
| .42000 | -.00280 | .12611 | .02642 |
| .39000 | -.00350 | .13628 | .02730 |
| .36000 | -.00410 | .14645 | .02810 |
| .33000 | -.00480 | .15662 | .02885 |
| .30000 | -.00530 | .16680 | .02956 |
| .28000 | -.00580 | .17697 | .03023 |
| .26000 | -.00590 | .18714 | .03085 |
| .24000 | -.00600 | .19732 | .03142 |
| .22000 | -.00610 | .20750 | .03194 |
| .20000 | -.00620 | .23294 | .03305 |
| .18000 | -.00630 | .25838 | .03390 |
| .16000 | -.00650 | .28382 | .03459 |

| LOWER SURFACE | | UPPER SURFACE | |
|---|---|---|---|
| x/l | y/l | x/l | y/l |
| .14000 | -.00660 | .30926 | .03520 |
| .12000 | -.00680 | .33469 | .03567 |
| .10000 | -.00690 | .36012 | .03602 |
| .08000 | -.00690 | .38581 | .03630 |
| .06000 | -.00680 | .41145 | .03586 |
| .05000 | -.00678 | .43670 | .03548 |
| .04500 | -.00680 | .46217 | .03509 |
| .04000 | -.00683 | .48767 | .03444 |
| .03500 | -.00684 | .51312 | .03360 |
| .03000 | -.00678 | .53854 | .03261 |
| .02500 | -.00664 | .56392 | .03152 |
| .02000 | -.00644 | .58930 | .03037 |
| .01600 | -.00613 | .62000 | .02950 |
| .01297 | -.00570 | .65000 | .02830 |
| .01000 | -.00497 | .68000 | .02680 |
| .00800 | -.00432 | .71000 | .02540 |
| .00600 | -.00292 | .74000 | .02380 |
| | | .77000 | .02210 |
| | | .80000 | .02040 |
| | | .83000 | .01870 |
| | | .86000 | .01690 |
| | | .89000 | .01500 |
| | | .92000 | .01310 |
| | | .94000 | .01170 |
| | | .96000 | .01030 |
| | | .98000 | .00890 |
| | | 1.00000 | .00800 |

8. Propeller according to any one of Claims 1 to 5, whose profile has a maximum relative thickness of 7%, characterised in that the aforesaid profile is determined by the coefficients x/l and y/l for the lower surface and the upper surface given below:

31

| LOWER SURFACE | | UPPER SURFACE | |
|---|---|---|---|
| x/1 | y/1 | x/1 | y/1 |
| 1.00000 | .00020 | .00704 | -.00026 |
| .99500 | .00060 | .01074 | .00837 |
| .99000 | .00091 | .01594 | .01394 |
| .98000 | .00160 | .02107 | .01746 |
| .96000 | .00280 | .02821 | .02141 |
| .94000 | .00410 | .03330 | .02390 |
| .92000 | .00520 | .03889 | .02648 |
| .90000 | .00670 | .04244 | .02795 |
| .87000 | .00840 | .04820 | .03025 |
| .85000 | .00960 | .05300 | .03210 |
| .83000 | .01080 | .06300 | .03564 |
| .80000 | .01240 | .07300 | .03895 |
| .76000 | .01430 | .08097 | .04147 |
| .73000 | .01570 | .09099 | .04459 |
| .70000 | .01680 | .10108 | .04755 |
| .66000 | .01810 | .11123 | .05035 |
| .63000 | .01870 | .12142 | .05299 |
| .60000 | .01900 | .13164 | .05548 |
| .56000 | .01910 | .14190 | .05782 |
| .53000 | .01900 | .15220 | .06002 |
| .50000 | .01860 | .16249 | .06206 |
| .46000 | .01750 | .17277 | .06398 |
| .43000 | .01640 | .18307 | .06577 |
| .40000 | .01510 | .19337 | .06744 |
| .38000 | .01390 | .20368 | .06900 |
| .36000 | .01280 | .22963 | .07241 |
| .34000 | .01110 | .25000 | .07440 |
| .32000 | .00960 | .30000 | .07720 |
| .30000 | .00780 | .35000 | .07820 |
| .26236 | .00437 | .40000 | .07740 |
| .23761 | .00180 | .45000 | .07530 |
| .21277 | -.00097 | .50000 | .07210 |
| .20277 | -.00211 | .55000 | .06750 |

32

| LOWER SURFACE | | UPPER SURFACE | |
| --- | --- | --- | --- |
| x/l | y/l | x/l | y/l |
| .19276 | -.00324 | .60000 | .06200 |
| .18274 | -.00435 | .65000 | .05580 |
| .17270 | -.00545 | .70000 | .04900 |
| .16268 | -.00654 | .75000 | .04240 |
| .15266 | -.00762 | .80000 | .03590 |
| .14261 | -.00868 | .85000 | .02920 |
| .13252 | -.00973 | .90000 | .02290 |
| .12239 | -.01075 | .92000 | .02020 |
| .11200 | -.01150 | .95000 | .01630 |
| .10200 | -.01240 | .97000 | .01370 |
| .09200 | -.01315 | .99000 | .01120 |
| .08100 | -.01362 | 1.00000 | .00995 |
| .07200 | -.01380 | | |
| .06000 | -.01380 | | |
| .05000 | -.01360 | | |
| .04000 | -.01310 | | |
| .03500 | -.01279 | | |
| .03000 | -.01225 | | |
| .02500 | -.01154 | | |
| .02000 | -.01054 | | |
| .01514 | -.00905 | | |
| .01022 | -.00657 | | |

9.  Propeller according to any one of Claims 1 to 5, whose profile has a maximum relative thickness of 12%, characterised in that the aforesaid profile is determined by the coefficients x/l and y/l for the lower surface and the upper surface given below:

33

| LOWER SURFACE | | UPPER SURFACE | |
|---|---|---|---|
| x/l | y/l | x/l | y/l |
| 1.00000 | -.00220 | 0.00000 | 0.00000 |
| .97957 | -.00014 | .00200 | .00775 |
| .95916 | .00195 | .00400 | .01160 |
| .93875 | .00395 | .00600 | .01450 |
| .91835 | .00522 | .01000 | .01925 |
| .89284 | .00642 | .01400 | .02320 |
| .86734 | .00726 | .01800 | .02650 |
| .84183 | .00788 | .02200 | .02935 |
| .81636 | .00825 | .02659 | .03240 |
| .79094 | .00831 | .03114 | .03541 |
| .76549 | .00807 | .03574 | .03814 |
| .74001 | .00762 | .04039 | .04069 |
| .71454 | .00704 | .04507 | .04315 |
| .68908 | .00634 | .04980 | .04551 |
| .66365 | .00552 | .05937 | .04992 |
| .63829 | .00456 | .06909 | .05401 |
| .61297 | .00343 | .07900 | .05780 |
| .58767 | .00214 | .08901 | .06132 |
| .56246 | .00068 | .09911 | .06459 |
| .53736 | -.00099 | .10928 | .06761 |
| .51235 | -.00292 | .11949 | .07040 |
| .48764 | -.00514 | .12975 | .07299 |
| .46245 | -.00761 | .14007 | .07538 |
| .43755 | -.01022 | .15044 | .07758 |
| .41263 | -.01292 | .16078 | .07958 |
| .38768 | -.01563 | .17110 | .08142 |
| .36272 | -.01830 | .18146 | .08310 |
| .33738 | -.02087 | .19181 | .08463 |
| .31296 | -.02336 | .20219 | .08601 |
| .28805 | -.02564 | .22835 | .08886 |
| .26330 | -.02773 | .25471 | .09092 |
| .23887 | -.02976 | .28074 | .09223 |
| .21424 | -.03176 | .30662 | .09289 |

| LOWER SURFACE | | UPPER SURFACE | |
|---|---|---|---|
| x/l | y/l | x/l | y/l |
| .20432 | -.03250 | .33248 | .09301 |
| .19435 | -.03319 | .35843 | .09260 |
| .18439 | -.03381 | .38425 | .09173 |
| .17440 | -.03435 | .41009 | .09045 |
| .16443 | -.03482 | .43595 | .08880 |
| .15448 | -.03522 | .46183 | .08677 |
| .14448 | -.03553 | .48743 | .08446 |
| .13443 | -.03575 | .51351 | .08187 |
| .12433 | -.03586 | .53928 | .07897 |
| .11419 | -.03584 | .56497 | .07584 |
| .10397 | -.03566 | .59054 | .07249 |
| .09367 | -.03531 | .61603 | .06898 |
| .08326 | -.03475 | .64149 | .06533 |
| .07268 | -.03390 | .66691 | .06154 |
| .06193 | -.03268 | .69227 | .05766 |
| .05650 | -.03188 | .71760 | .05372 |
| .05103 | -.03095 | .74290 | .04972 |
| .04552 | -.02989 | .76821 | .04571 |
| .03996 | -.02859 | .79355 | .04166 |
| .03435 | -.02695 | .81891 | .03753 |
| .02873 | -.02507 | .84423 | .03328 |
| .02084 | -.02248 | .86950 | .02896 |
| .01400 | -.01910 | .89478 | .02460 |
| .01000 | -.01640 | .92007 | .02015 |
| .00600 | -.01280 | .94029 | .01655 |
| .00400 | -.01045 | .96051 | .01340 |
| .00200 | -.00680 | .98073 | .01015 |
| | | 1.00092 | .00680 |

10. Propeller according to any one of Claims 1 to 5, whose profile has a maximum relative thickness of 20%, characterised in that the aforesaid profile is determined by the coefficients x/l and y/l for the lower surface and the upper surface given below:

| LOWER SURFACE | | UPPER SURFACE | |
|---|---|---|---|
| x/l | y/l | x/l | y/l |
| 1.00000 | .00350 | 0.00000 | .00900 |
| .97000 | .00255 | .00200 | .01970 |
| .95000 | .00195 | .00500 | .02820 |
| .93000 | .00130 | .00700 | .03220 |
| .91000 | .00080 | .01000 | .03730 |
| .89266 | .00002 | .01500 | .04430 |
| .86704 | -.00049 | .02000 | .04990 |
| .84147 | -.00126 | .02500 | .05510 |
| .81598 | -.00237 | .03000 | .05980 |
| .79051 | -.00386 | .04135 | .06932 |
| .76497 | -.00567 | .05497 | .07913 |
| .73942 | -.00771 | .06437 | .08492 |
| .71388 | -.00990 | .07403 | .09022 |
| .68838 | -.01222 | .08389 | .09510 |
| .66297 | -.01469 | .09391 | .09958 |
| .63766 | -.01733 | .10405 | .10371 |
| .61238 | -.02013 | .11428 | .10747 |
| .58719 | -.02311 | .12460 | .11092 |
| .56219 | -.02627 | .13501 | .11409 |
| .53732 | -.02966 | .14550 | .11696 |
| .51279 | -.03335 | .15598 | .11956 |
| .48819 | -.03736 | .16643 | .12190 |
| .46323 | -.04148 | .17692 | .12402 |
| .43864 | -.04568 | .18741 | .12589 |
| .41400 | -.04984 | .19794 | .12755 |
| .38933 | -.05387 | .22463 | .13086 |
| .36468 | -.05768 | .25152 | .13308 |
| .34020 | -.06121 | .27823 | .13430 |
| .31555 | -.06443 | .30446 | .13457 |
| .29096 | -.06717 | .33063 | .13403 |
| .26685 | -.06946 | .35696 | .13276 |
| .24292 | -.07146 | .38314 | .13083 |
| .21879 | -.07310 | .40929 | .12833 |
| .20899 | -.07359 | .43547 | .12532 |

EP 0 227 524 B1

LOWER SURFACE                    UPPER SURFACE

| x/l | y/l | x/l | y/l |
|---|---|---|---|
| .19915 | -.07395 | .46170 | .12183 |
| .18931 | -.07417 | .48756 | .11797 |
| .17943 | -.07424 | .51378 | .11394 |
| .16958 | -.07415 | .54007 | .10956 |
| .15974 | -.07389 | .56602 | .10492 |
| .14983 | -.07346 | .59184 | .10005 |
| .13982 | -.07284 | .61747 | .09499 |
| .12972 | -.07200 | .64302 | .08978 |
| .11954 | -.07089 | .66853 | .08444 |
| .10923 | -.06950 | .69393 | .07899 |
| .09876 | -.06778 | .71925 | .07349 |
| .08809 | -.06567 | .74454 | .06794 |
| .07717 | -.06308 | .76980 | .06238 |
| .06597 | -.05985 | .79509 | .05686 |
| .06029 | -.05793 | .82044 | .05136 |
| .05456 | -.05580 | .84577 | .04582 |
| .04876 | -.05346 | .87101 | .04024 |
| .04285 | -.05072 | .89621 | .03465 |
| .03688 | -.04742 | .92146 | .02911 |
| .03000 | -.04340 | .94165 | .02461 |
| .02500 | -.03980 | .96186 | .02040 |
| .02000 | -.03590 | .98000 | .01690 |
| .01500 | -.03130 | 1.00000 | .01250 |
| .01000 | -.02550 | | |
| .00500 | -.01740 | | |
| .00200 | -.01000 | | |

**11.** Propeller according to Claim 1, characterised in that, on both sides of the point B and over a relative distance of 2% on both sides of this point, the curvature of the upper surface varies between - the point B' situated at 2% of the chord length, where the curvature is expressed in terms of the maximum relative thickness (e/l) by the following relationship:

$$C_B' = 287.91(e/l) - 5172.1(e/l)^2 + 39594(e/l)^3 - 99582(e/l)^4$$

- and the point B" situated at 6% of the chord length, where the curvature is expressed in terms of the maximum relative thickness (e/l) by the following relationship:

$$C_B'' = 71.596(e/l) - 1193.3(e/l)^2 + 10661(e/l)^3 - 30048(e/l)^4$$

37

12. Propeller according to Claim 1 or 2, characterised in that, on both sides of the point D and over a relative distance of 2% on both sides of this point, the curvature of the lower surface varies between:
- the point D' situated at 1.5% of the chord length, where the curvature is expressed in terms of the maximum relative thickness (e/l) by the following relationship:

$$C_D' = 704.62(e/l) - 17922(e/l)^2 + 150080(e/l)^3 - 388830(e/l)^4$$

- and the point D" situated at 5.5% of the chord length, where the curvature is expressed in terms of the maximum relative thickness (e/l) by the following relationship:

$$C_D'' = -93.605(e/l) + 4398.5(e/l)^2 - 40076(e/l)^3 + 106020(e/l)^4$$

13. Propeller according to any one of Claims 1 to 12, characterised in that each blade comprises:
- up to 0.20R, a cylindrical profile;
- between 0.20R and 0.35R, a profile with a relative thickness of 20%;
- between 0.35R and 0.65R, a profile with a relative thickness of 15%;
- between 0.65R and 0.75R, a profile with a relative thickness of 12%;
- between 0.75R and R, a profile with a relative thickness of 10%.

14. Propeller according to any one of Claims 1 to 12, characterised in that each blade comprises:
- up to 0.20R, a cylindrical profile;
- between 0.20R and 0.35R, a profile with a relative thickness of 20%;
- between 0.35R and 0.55R, a profile with a relative thickness of 12%;
- between 0.55R and 0.70R, a profile with a relative thickness of 7%;
- between 0.70R and 0.80R, a profile with a relative thickness of 6%;
- between 0.80R and 0.95R, a profile with a relative thickness of 4%;
- between 0.95R and R, a profile with a relative thickness of 3%.

**Patentansprüche**

1. Luftschraube mit Luftschraubenblättern der Blattlänge R, die wenigstens ab einem Gebiet des Luftschraubenblatts, das jenseits eines relativen Radius von 0,20R liegt, ein Profil aufweisen, dessen maximale relative Dicke zwischen 3% und 25% beträgt, dessen Blattvorderkante eine maximale Krümmung aufweist, dessen Blatthinterkante eine Null-Krümmung aufweist, dessen Oberseite eine konvexe Form zwischen der Blattvorderkante und der Blatthinterkante aufweist, und dessen Unterseite, von der Blattvorderkante aus gesehen, zunächst eine konvexe Form und dann zur Blatthinterkante hin eine konkave Form aufweist,
**dadurch gekennzeichnet,**
daß die Krümmungen des Profils folgende sind :
(a) auf der Oberseite nimmt die Krümmung zwischen der Blattvorderkante A und der Blatthinterkante F ab und stellt an einem Punkt B, der bei etwa 4% der Blattbreite liegt, einen Wert von etwa 4 dar,
(b) auf der Unterseite nimmt die Krümmung zwischen der Blattvorderkante A und einem Punkt D, der bei etwa 3,5% der Blattbreite liegt, ab, um an diesem Punkt D einen Wert von etwa 8 zu erreichen; die Krümmung nimmt zwischen diesem Punkt D und dem Punkt E der Null-Krümmung, der zwischen 10% und 60% der Blattbreite liegt, ab.

2. Luftschraube nach Anspruch 1,
**dadurch gekennzeichnet,**
daß sich die Krümmung der Oberseite zu beiden Seiten des Punktes B und über eine relative Entfernung von 2% zu beiden Seiten dieses Punktes zwischen 5,5 und 8,2 im Punkt B', der bei 2% der Blattbreite liegt, und zwischen 1,5 und 3,8 für den Punkt B", der bei 6% der Blattbreite liegt, entwickelt.

3. Luftschraube nach Anspruch 1 oder 2,
**dadurch gekennzeichnet,**
daß sich die Krümmung der Unterseite zu beiden Seiten des Punktes D und über eine relative Entfernung von 2% zu beiden Seiten dieses Punktes zwischen 8,2 und 3,5 im Punkt D', der bei 1,5% der Blattbreite liegt, und zwischen 1 und 6,3 für den Punkt D", der bei 5,5% der Blattbreite liegt, entwickelt.

4. Luftschraube nach einem der Ansprüche 1 bis 3,
**dadurch gekennzeichnet,**
daß sich die Krümmung der Unterseite zu beiden Seiten des Punktes E und über eine relative Entfernung von 2% zu beiden Seiten dieses Punktes zwischen 0,16 im Punkt E', der bei - 2% der Blattbreite, bezogen auf den Punkt E, liegt, und - 0,16 für den Punkt E", der bei + 2% der Blattbreite, bezogen auf den Punkt E, liegt, entwickelt.

5. Luftschraube nach einem der Ansprüche 1 bis 4,
**dadurch gekennzeichnet,**
daß der Punkt der Blattbreite, an dem die Krümmung der Unterseite Null ist, eine auf die Blattbreite $l$ bezogene Abszisse X aufweist, die durch die Formel
$(x/l) = 2(e/l) + 0,08$ gegeben ist,
wobei e die Dicke des Profils und
$l$ die Blattbreite des Profils bedeuten.

6. Luftschraube nach einem der Ansprüche 1 bis 5,
**dadurch gekennzeichnet,**
daß die Mittellinie des Profils durch die Formel

$$(y/l) = a_0(x/l)^{1/2} + a_1(x/l) + a_2(x/l)^2 + a_3(x/l)^3 + a_4(x/l)^4 + a_5(x/l)^5$$

dargestellt ist, wobei

$$a_0 = 3,2056(e/l) - 110(e/l)^2 + 1018,7(e/l)^3 - 2751,7(e/l)^4$$
$$a_1 = -11,537(e/l) + 500,8(e/l)^2 - 4851,6(e/l)^3 + 13309(e/l)^4$$
$$a_2 = 1,236(e/l) - 242,27(e/l)^2 + 2803(e/l)^3 - 8315,2(e/l)^4$$
$$a_3 = 38,5(e/l) - 1154,8(e/l)^2 + 9988,3(e/l)^3 - 25693(e/l)^4$$
$$a_4 = -47,99(e/l) + 1547,7(e/l)^2 - 13768(e/l)^3 + 35952(e/l)^4$$
$$a_5 = 16,546(e/l) - 540,04(e/l)^2 + 4797,5(e/l)^3 - 12467(e/l)^4$$

und daß die Gesetzmäßigkeit der Dicke durch die Formel:

$$(y/l) = b_0(x/l)^{1/2} + b_1(x/l) + b_2(x/l)^2 + b_3(x/l)^3 + b_4(x/l)^4 + b_5(x/l)^5$$

dargestellt ist, wobei :

$$b_0 = 3,476(e/l) - 59,16(e/l)^2 + 512,13(e/l)^3 - 1320,4(e/l)^4$$
$$b_1 = -12,34(e/l) + 358,32(e/l)^2 - 3097,1(e/l)^3 + 8017,9(e/l)^4$$
$$b_2 = 48,71(e/l) - 1540,2(e/l)^2 + 13202(e/l)^3 - 34016(e/l)^4$$
$$b_3 = -101,88(e/l) + 3087,6(e/l)^2 - 26339(e/l)^3 + 67587(e/l)^4$$
$$b_4 = 93159(e/l) - 2744,7(e/l)^2 + 23268(e/l)^3 - 59364(e/l)^4$$
$$b_5 = -30,96(e/l) + 896,5(e/l)^2 - 7539,8(e/l)^3 + 19093(e/l)^4.$$

7. Luftschraube nach einem der Ansprüche 1 bis 5, deren Profil eine maximale relative Dicke von 4% aufweist,
**dadurch gekennzeichnet,**
daß das vorgenannte Profil durch die nachstehend angegebenen Koeffizienten $x/l$ und $y/l$ für die Unterseite und die Oberseite bestimmt ist:

| UNTERSEITE | | OBERSEITE | |
|---|---|---|---|
| x/l | y/l | x/l | y/l |
| 1.00000 | -.00100 | .00460 | .00025 |
| .98000 | -.00020 | .00600 | .00354 |
| .96000 | .00060 | .00800 | .00540 |
| .94000 | .00130 | .01000 | .00680 |
| .92000 | .00200 | .01200 | .00800 |
| .90000 | .00270 | .01400 | .00897 |
| .87000 | .00330 | .01700 | .01018 |
| .84000 | .00370 | .02000 | .01122 |
| .81000 | .00400 | .02453 | .01253 |
| .78000 | .00410 | .02958 | .01374 |
| .75000 | .00410 | .03465 | .01480 |
| .72000 | .00400 | .03973 | .01574 |
| .69000 | .00370 | .04480 | .01661 |
| .66000 | .00330 | .04988 | .01744 |
| .63000 | .00280 | .05495 | .01822 |
| .60000 | .00220 | .06511 | .01965 |
| .57000 | .00150 | .07528 | .02097 |
| .54000 | .00080 | .08544 | .02220 |
| .51000 | -.00010 | .09560 | .02335 |
| .48000 | -.00100 | .10577 | .02443 |
| .45000 | -.00190 | .11594 | .02546 |
| .42000 | -.00280 | .12611 | .02642 |
| .39000 | -.00350 | .13628 | .02730 |
| .36000 | -.00410 | .14645 | .02810 |
| .33000 | -.00480 | .15662 | .02885 |
| .30000 | -.00530 | .16680 | .02956 |
| .28000 | -.00580 | .17697 | .03023 |
| .26000 | -.00590 | .18714 | .03085 |
| .24000 | -.00600 | .19732 | .03142 |
| .22000 | -.00610 | .20750 | .03194 |
| .20000 | -.00620 | .23294 | .03305 |
| .18000 | -.00630 | .25838 | .03390 |
| .16000 | -.00650 | .28382 | .03459 |

40

| UNTERSEITE | | OBERSEITE | |
| --- | --- | --- | --- |
| x/l | y/l | x/l | y/l |
| .14000 | -.00660 | .30926 | .03520 |
| .12000 | -.00680 | .33469 | .03567 |
| .10000 | -.00690 | .36012 | .03602 |
| .08000 | -.00690 | .38581 | .03630 |
| .06000 | -.00680 | .41145 | .03586 |
| .05000 | -.00678 | .43670 | .03548 |
| .04500 | -.00680 | .46217 | .03509 |
| .04000 | -.00683 | .48767 | .03444 |
| .03500 | -.00684 | .51312 | .03360 |
| .03000 | -.00678 | .53854 | .03261 |
| .02500 | -.00664 | .56392 | .03152 |
| .02000 | -.00644 | .58930 | .03037 |
| .01600 | -.00613 | .62000 | .02950 |
| .01297 | -.00570 | .65000 | .02830 |
| .01000 | _.00497 | .68000 | .02680 |
| .00800 | -.00432 | .71000 | .02540 |
| .00600 | -.00292 | .74000 | .02380 |
| | | .77000 | .02210 |
| | | .80000 | .02040 |
| | | .83000 | .01870 |
| | | .86000 | .01690 |
| | | .89000 | .01500 |
| | | .92000 | .01310 |
| | | .94000 | .01170 |
| | | .96000 | .01030 |
| | | .98000 | .00890 |
| | | 1.00000 | .00800 |

8. Luftschraube nach einem der Ansprüche 1 bis 5, deren Profil eine maximale relative Dicke von 7% aufweist,
**dadurch gekennzeichnet,**
daß das vorgenannte Profil durch die nachstehend angegebenen Koeffizienten x/l und y/l für die Unterseite und die Oberseite bestimmt ist:

| UNTERSEITE | | OBERSEITE | |
| --- | --- | --- | --- |
| x/l | y/l | x/l | y/l |
| 1.00000 | .00020 | .00704 | -.00026 |
| .99500 | .00060 | .01074 | .00837 |
| .99000 | .00091 | .01594 | .01394 |
| .98000 | .00160 | .02107 | .01746 |
| .96000 | .00280 | .02821 | .02141 |
| .94000 | .00410 | .03330 | .02390 |
| .92000 | .00520 | .03889 | .02648 |
| .90000 | .00670 | .04244 | .02795 |
| .87000 | .00840 | .04820 | .03025 |
| .85000 | .00960 | .05300 | .03210 |
| .83000 | .01080 | .06300 | .03564 |
| .80000 | .01240 | .07300 | .03895 |
| .76000 | .01430 | .08097 | .04147 |
| .73000 | .01570 | .09099 | .04459 |
| .70000 | .01680 | .10108 | .04755 |
| .66000 | .01810 | .11123 | .05035 |
| .63000 | .01870 | .12142 | .05299 |
| .60000 | .01900 | .13164 | .05548 |
| .56000 | .01910 | .14190 | .05782 |
| .53000 | .01900 | .15220 | .06002 |
| .50000 | .01860 | .16249 | .06206 |
| .46000 | .01750 | .17277 | .06398 |
| .43000 | .01640 | .18307 | .06577 |
| .40000 | .01510 | .19337 | .06744 |
| .38000 | .01390 | .20368 | .06900 |
| .36000 | .01280 | .22963 | .07241 |
| .34000 | .01110 | .25000 | .07440 |
| .32000 | .00960 | .30000 | .07720 |
| .30000 | .00780 | .35000 | .07820 |
| .26236 | .00437 | .40000 | .07740 |
| .23761 | .00180 | .45000 | .07530 |
| .21277 | -.00097 | .50000 | .07210 |
| .20277 | -.00211 | .55000 | .06750 |

EP 0 227 524 B1

| UNTERSEITE | | OBERSEITE | |
|---|---|---|---|
| x/l | y/l | x/l | y/l |
| .19276 | -.00324 | .60000 | .06200 |
| .18274 | -.00435 | .65000 | .05580 |
| .17270 | -.00545 | .70000 | .04900 |
| .16268 | -.00654 | .75000 | .04240 |
| .15266 | -.00762 | .80000 | .03590 |
| .14261 | -.00868 | .85000 | .02920 |
| .13252 | -.00973 | .90000 | .02290 |
| .12239 | -.01075 | .92000 | .02020 |
| .11200 | -.01150 | .95000 | .01630 |
| .10200 | -.01240 | .97000 | .01370 |
| .09200 | -.01315 | .99000 | .01120 |
| .08100 | -.01362 | 1.00000 | .00995 |
| .07200 | -.01380 | | |
| .06000 | -.01380 | | |
| .05000 | -.01360 | | |
| .04000 | -.01310 | | |
| .03500 | -.01279 | | |
| .03000 | -.01225 | | |
| .02500 | -.01154 | | |
| .02000 | -.01054 | | |
| .01514 | -.00905 | | |
| .01022 | -.00657 | | |

9. Luftschraube nach einem der Ansprüche 1 bis 5, deren Profil eine maximale relative Dicke von 12% aufweist,
   **dadurch gekennzeichnet,**
   daß das vorgenannte Profil durch die nachstehend angegebenen Koeffizienten x/l und y/l für die Unterseite und die Oberseite bestimmt ist:

43

| UNTERSEITE | | OBERSEITE | |
| --- | --- | --- | --- |
| x/l | y/l | x/l | y/l |
| 1.00000 | -.00220 | 0.00000 | 0.00000 |
| .97957 | -.00014 | .00200 | .00775 |
| .95916 | .00195 | .00400 | .01160 |
| .93875 | .00395 | .00600 | .01450 |
| .91835 | .00522 | .01000 | .01925 |
| .89284 | .00642 | .01400 | .02320 |
| .86734 | .00726 | .01800 | .02650 |
| .84183 | .00788 | .02200 | .02935 |
| .81636 | .00825 | .02659 | .03240 |
| .79094 | .00831 | .03114 | .03541 |
| .76549 | .00807 | .03574 | .03814 |
| .74001 | .00762 | .04039 | .04069 |
| .71454 | .00704 | .04507 | .04315 |
| .68908 | .00634 | .04980 | .04551 |
| .66365 | .00552 | .05937 | .04992 |
| .63829 | .00456 | .06909 | .05401 |
| .61297 | .00343 | .07900 | .05780 |
| .58767 | .00214 | .08901 | .06132 |
| .56246 | .00068 | .09911 | .06459 |
| .53736 | -.00099 | .10928 | .06761 |
| .51235 | -.00292 | .11949 | .07040 |
| .48764 | -.00514 | .12975 | .07299 |
| .46245 | -.00761 | .14007 | .07538 |
| .43755 | -.01022 | .15044 | .07758 |
| .41263 | -.01292 | .16078 | .07958 |
| .38768 | -.01563 | .17110 | .08142 |
| .36272 | -.01830 | .18146 | .08310 |
| .33738 | -.02087 | .19181 | .08463 |
| .31296 | -.02336 | .20219 | .08601 |
| .28805 | -.02564 | .22835 | .08886 |
| .26330 | -.02773 | .25471 | .09092 |
| .23887 | -.02976 | .28074 | .09223 |
| .21424 | -.03176 | .30662 | .09289 |

| | UNTERSEITE | | OBERSEITE | |
| --- | --- | --- | --- | --- |
| | x/1 | y/1 | x/1 | y/1 |
| | .20432 | −.03250 | .33248 | .09301 |
| | .19435 | −.03319 | .35843 | .09260 |
| | .18439 | −.03381 | .38425 | .09173 |
| | .17440 | −.03435 | .41009 | .09045 |
| | .16443 | −.03482 | .43595 | .08880 |
| | .15448 | −.03522 | .46183 | .08677 |
| | .14448 | −.03553 | .48743 | .08446 |
| | .13443 | −.03575 | .51351 | .08187 |
| | .12433 | −.03586 | .53928 | .07897 |
| | .11419 | −.03584 | .56497 | .07584 |
| | .10397 | −.03566 | .59054 | .07249 |
| | .09367 | −.03531 | .61603 | .06898 |
| | .08326 | −.03475 | .64149 | .06533 |
| | .07268 | −.03390 | .66691 | .06154 |
| | .06193 | −.03268 | .69227 | .05766 |
| | .05650 | −.03188 | .71760 | .05372 |
| | .05103 | −.03095 | .74290 | .04972 |
| | .04552 | −.02989 | .76821 | .04571 |
| | .03996 | −.02859 | .79355 | .04166 |
| | .03435 | −.02695 | .81891 | .03753 |
| | .02873 | −.02507 | .84423 | .03328 |
| | .02084 | −.02248 | .86950 | .02896 |
| | .01400 | −.01910 | .89478 | .02460 |
| | .01000 | −.01640 | .92007 | .02015 |
| | .00600 | −.01280 | .94029 | .01655 |
| | .00400 | −.01045 | .96051 | .01340 |
| | .00200 | −.00680 | .98073 | .01015 |
| | | | 1.00092 | .00680 |

10. Luftschraube nach einem der Ansprüche 1 bis 5, deren Profil eine maximale relative Dicke von 20% aufweist,
**dadurch gekennzeichnet,**
daß das vorgenannte Profil durch die nachstehend angegebenen Koeffizienten x/l und y/l für die Unterseite und die Oberseite bestimmt ist:

| UNTERSEITE | | OBERSEITE | |
|---|---|---|---|
| x/l | y/l | x/l | y/l |
| 1.00000 | .00350 | 0.00000 | .00900 |
| .97000 | .00255 | .00200 | .01970 |
| .95000 | .00195 | .00500 | .02820 |
| .93000 | .00130 | .00700 | .03220 |
| .91000 | .00080 | .01000 | .03730 |
| .89266 | .00002 | .01500 | .04430 |
| .86704 | −.00049 | .02000 | .04990 |
| .84147 | −.00126 | .02500 | .05510 |
| .81598 | −.00237 | .03000 | .05980 |
| .79051 | −.00386 | .04135 | .06932 |
| .76497 | −.00567 | .05497 | .07913 |
| .73942 | −.00771 | .06437 | .08492 |
| .71388 | −.00990 | .07403 | .09022 |
| .68838 | −.01222 | .08389 | .09510 |
| .66297 | −.01469 | .09391 | .09958 |
| .63766 | −.01733 | .10405 | .10371 |
| .61238 | −.02013 | .11428 | .10747 |
| .58719 | −.02311 | .12460 | .11092 |
| .56219 | −.02627 | .13501 | .11409 |
| .53732 | −.02966 | .14550 | .11696 |
| .51279 | −.03335 | .15598 | .11956 |
| .48819 | −.03736 | .16643 | .12190 |
| .46323 | −.04148 | .17692 | .12402 |
| .43864 | −.04568 | .18741 | .12589 |
| .41400 | −.04984 | .19794 | .12755 |
| .38933 | −.05387 | .22463 | .13086 |
| .36468 | −.05768 | .25152 | .13308 |
| .34020 | −.06121 | .27823 | .13430 |
| .31555 | −.06443 | .30446 | .13457 |
| .29096 | −.06717 | .33063 | .13403 |
| .26685 | −.06946 | .35696 | .13276 |
| .24292 | −.07146 | .38314 | .13083 |
| .21879 | −.07310 | .40929 | .12833 |

| INTRADOS | | EXTRADOS | |
|---|---|---|---|
| x/l | y/l | x/l | y/l |
| .20899 | -.07359 | .43547 | .12532 |
| .19915 | -.07395 | .46170 | .12183 |
| .18931 | -.07417 | .48756 | .11797 |
| .17943 | -.07424 | .51378 | .11394 |
| .16958 | -.07415 | .54007 | .10956 |
| .15974 | -.07389 | .56602 | .10492 |
| .14983 | -.07346 | .59184 | .10005 |
| .13982 | -.07284 | .61747 | .09499 |
| .12972 | -.07200 | .64302 | .08978 |
| .11954 | -.07089 | .66853 | .08444 |
| .10923 | -.06950 | .69393 | .07899 |
| .09876 | -.06778 | .71925 | .07349 |
| .08809 | -.06567 | .74454 | .06794 |
| .07717 | -.06308 | .76980 | .06238 |
| .06597 | -.05985 | .79509 | .05686 |
| .06029 | -.05793 | .82044 | .05136 |
| .05456 | -.05580 | .84577 | .04582 |
| .04876 | -.05346 | .87101 | .04024 |
| .04285 | -.05072 | .89621 | .03465 |
| .03688 | -.04742 | .92146 | .02911 |
| .03000 | -.04340 | .94165 | .02461 |
| .02500 | -.03980 | .96186 | .02040 |
| .02000 | -.03590 | .98000 | .01690 |
| .01500 | -.03130 | 1.00000 | .01250 |
| .01000 | -.02550 | | |
| .00500 | -.01740 | | |
| .00200 | -.01000 | | |

**11.** Luftschraube nach Anspruch 1,

**dadurch gekennzeichnet,**

daß sich die Krümmung der Oberseite zu beiden Seiten des Punktes B und über eine relative Entfernung von 2% zu beiden Seiten dieses Punktes zwischen

- dem Punkt B', der bei 2% der Blattbreite liegt, wo sich die Krümmung in Abhängigkeit von der maximalen relativen Dicke (e/l) nach folgender Beziehung bestimmt :

$$C_B' = 287{,}91(e/l) - 5172{,}1(e/l)^2 + 39594(e/l)^3 - 99582(e/l)^4$$

- und dem Punkt B", der bei 6% der Blattbreite liegt, wo sich die Krümmung in Abhängigkeit von der relativen Dicke (e/l) nach folgender Beziehung bestimmt :

$$C_B'' = 71{,}596(e/l) - 1193{,}3(e/l)^2 + 10661(e/l)^3 - 30048(e/l)^4$$

entwickelt.

12. Luftschraube nach Anspruch 1 oder 2,
   **dadurch gekennzeichnet,**
   daß sich die Krümmung der Unterseite zu beiden Seiten des Punktes D und über eine relative Entfernung von 2% zu beiden Seiten dieses Punktes zwischen
   - dem Punkt D', der bei 1,5% der Blattbreite liegt, wo sich die Krümmung in Abhängigkeit von der maximalen relativen Dicke (e/l) nach folgender Beziehung bestimmt :

$$C_D' = 704{,}62(e/l) - 17922(e/l)^2 + 150080(e/l)^3 - 388830(e/l)^4$$

   - und dem Punkt D", der bei 5,5% der Blattbreite liegt, wo sich die Krümmung in Abhängigkeit von der maximalen relativen Dicke (e/l) nach folgender Beziehung bestimmt :

$$C_D'' = -93{,}605(e/l) + 4398{,}5(e/l)^2 - 40076(e/l)^3 + 106020(e/l)^4$$

   entwickelt.

13. Luftschraube nach einem der Ansprüche 1 bis 12,
   **dadurch gekennzeichnet,**
   daß jedes Luftschraubenblatt
   - bis 0,20R ein zylindrisches Profil,
   - zwischen 0,20R und 0,35R ein Profil mit einer relativen Dicke von 20%;
   - zwischen 0,35R und 0,65R ein Profil mit einer relativen Dicke von 15%;
   - zwischen 0,65R und 0,75R ein Profil mit einer relativen Dicke von 12%;
   - zwischen 0,75R und R ein Profil mit einer relativen Dicke von 10%;
   aufweist.

14. Luftschraube nach einem der Ansprüche 1 bis 12,
   **dadurch gekennzeichnet,**
   daß jedes Luftschraubenblatt
   - bis 0,20R ein zylindrisches Profil,
   - zwischen 0,20R und 0,35R ein Profil mit einer relativen Dicke von 20%;
   - zwischen 0,35R und 0,55R ein Profil mit einer relativen Dicke von 12%;
   - zwischen 0,55R und 0,70R ein Profil mit einer relativen Dicke von 7%;
   - zwischen 0,70R und 0,80R ein Profil mit einer relativen Dicke von 6%;
   - zwischen 0,80R und 0,95R ein Profil mit einer relativen Dicke von 4%; und
   - zwischen 0,95R und R ein Profil mit einer relativen Dicke von 3%
   aufweist.

EP 0 227 524 B1

# FIG.1.

FIG.2.

FIG.3.

FIG.4.

EP 0 227 524 B1

FIG.5.

EP 0 227 524 B1

FIG.6a.

FIG.6b.

FIG.6c.

FIG.6d.

EP 0 227 524 B1

FIG.7a.

FIG.7b.

FIG.7c.

FIG.8a.

FIG.8b.

FIG.8c.

# FIG.9.

FIG.10a.

FIG.10b.

FIG.11a.

FIG.11b.

FIG.11c.

EP 0 227 524 B1